# EUROPEAN PATENT SPECIFICATION

(11) **EP 3 349 514 B1**
(45) Date of publication and mention of the grant of the patent: **13.05.2020**
(21) Application number: 16843454.6
(22) Date of filing: 19.05.2016
(51) Int. Cl.: H04W 4/02, H04W 4/029, H04W 4/44, H04W 52/02, H04W 72/04, H04W 76/20

(54) **INTERNET OF VEHICLES COMMUNICATION CONTROL METHOD AND DEVICE**
KOMMUNIKATIONSSTEUERUNGSVERFAHREN UND -VORRICHTUNG FÜR INTERNET DER FAHRZEUGE
PROCÉDÉ ET DISPOSITIF DE COMMANDE DE COMMUNICATION DE L'INTERNET DES VÉHICULES

(30) Priority: 07.09.2015 CN 201510563143
(43) Date of publication of application: 18.07.2018
(73) Proprietor: ZTE Corporation, Shenzhen, Guangdong 518057 (CN)
(72) Inventor: LUO, Wei, Shenzhen Guangdong 518057 (CN); CHEN, Lin, Shenzhen Guangdong 518057 (CN)
(74) Representative: Baudler, Ron
(86) International application number: PCT/CN2016/082660
(87) International publication number: WO 2017/041516

(56) References cited:
- WO-A1-2013/109960
- CN-A- 102 768 768
- CN-A- 103 793 944
- CN-A- 104 869 654
- CN-A- 104 869 654
- CN-U- 202 159 432
- KR-A- 20110 065 347
- US-A1- 2013 079 040
- ABD-ELRAHMAN EMAD ET AL: "A hybrid model to extend vehicular intercommunication V2V through D2D architecture", 2015 INTERNATIONAL CONFERENCE ON COMPUTING, NETWORKING AND COMMUNICATIONS (ICNC), IEEE, 16 February 2015 (2015-02-16), pages 754-759, XP032752678, DOI: 10.1109/ICCNC.2015.7069441 [retrieved on 2015-03-26]

## Description

### TECHNICAL FIELD

The present disclosure relates to, but is not limited to, the field of communication, in particular, to a method and device for controlling communication in Internet of Vehicles.

### BACKGROUND

With the development of wireless multimedia services, the demand for improving data transmission rate and user experience is also increasing. Further, there are relatively high requirements for the system capacity and coverage of traditional cellular networks. In addition, application scenarios, such as public security, social networking, close data sharing and local advertising, have also led to a growing demand for understanding nearby people and things, and realizing communication with them (ProSe, Proximity Services). However, in the related art, cellular networks centering on the base station have obvious limitations in the support of high data rates and proximity services.

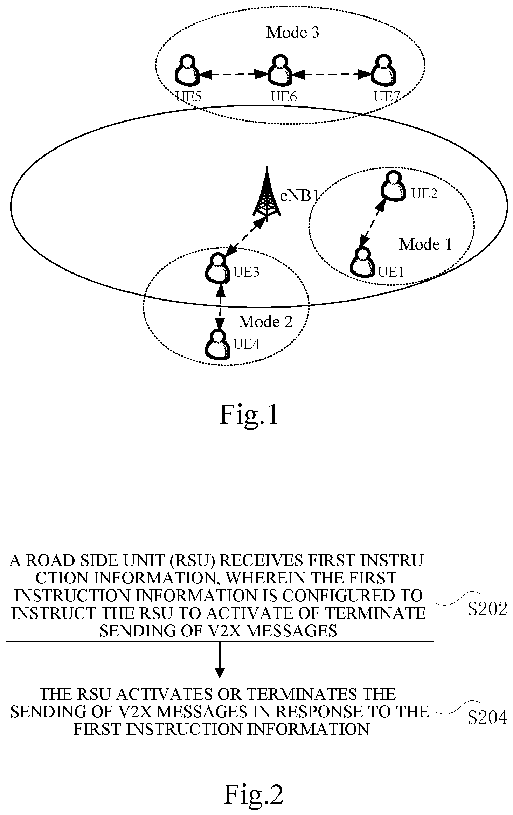

In this context of demand, D2D (Device-to-Device) technology, which represents a new direction for the future development of communication technology, has emerged. The application of the D2D technology can reduce the burden on the cellular network, reduce the battery power consumption of the user equipment, increase the data rate, and improve the robustness of the network infrastructure, so as to meet the requirements of the above high data rate services and the proximity services well. In addition, the D2D technology can also work in the licensed frequency band or the unlicensed frequency band to allow multiple D2D-enabled user equipments (that is, the D2D user equipment, the D2D UE) to perform direct discovery/direct communication under conditions with or without a network infrastructure. The application scenarios of D2D include:
1) terminal direct transmission, as shown in mode 1 of Fig. 1, in which UE1 and UE2 directly perform data interaction under the coverage of the cellular network, and the user plane data does not pass through the network infrastructure;
2) terminal relay transmission in a weak/uncovered area, such as mode 2 in Fig. 1, which allows UE4 with a poor signal quality to communicate with the network through a nearby network-covered UE3, thereby helping the operator to extend communication coverage and improve the network capacity; and
3) direct communication among devices in the event of an earthquake or other emergencies during which the cellular network can not work normally, as shown in mode 3 in Fig. 1, in which the control plane and the user plane among UE5, UE6 and UE7 do not utilize the network infrastructure, and one-hop or multi-hop data communications can be implemented.

Further, the D2D technology generally includes a D2D discovery technology and a D2D communication technology. The D2D discovery technology refers to a technique for judging/determining whether the first user equipment is adjacent to the second user equipment. In general, D2D user equipments may discover each other by sending or receiving a discovery signal/information. The D2D communication technology refers to a technology in which D2D user equipments can directly communicate some or all of the communication data therebetween without using the network infrastructure.

On the other hand, with the rapid economic and social development, the number of car ownership has increased rapidly and road accidents have also taken place frequently. There is an urgent need to enhance vehicle safety design. Among them, the technology for enhancing vehicle safety includes passive safety technology and active safety technology. The passive safety technology is used to protect personnel and goods inside and outside of vehicles after an accident. The active safety technology is used to prevent and reduce vehicle accidents and to prevent traffic participants from being harmed. The active safety technology, i.e., Internet of vehicles technology, is the focus and trend of the development of modern vehicle safety technology.

Based on the above features and advantages of the D2D technology, the related art has proposed to implement applications of Internet of vehicles by using cellular wireless communications and D2D technologies. The main scenarios supporting communications include instant messaging and vehicle early-warning. The modes of communication in Internet of Vehicles are specifically divided into Vehicle-to-Vehicle Communications (V2V), Vehicle-to-Infrastructure Communications (V2I), Vehicle-to-Pedestrian communications (V2P), and these three categories may also be referred to as Vehicle-to-Everything Communications (V2X). Among them, V2I is a type of V2X service, which enables communication between a terminal UE using a V2I application and a Road Side Unit (RSU).

The RSU is an entity that supports the V2I service, and may receive data from UEs using the V2I application or send data to UEs using the V2I application.

In the communication system based on Internet of Vehicles, by using advanced wireless cellular communication technology, real-time information interaction between the vehicles and between the vehicle and the road side infrastructure is realized, the current statuses (such as a position, a speed, an acceleration, and a travelling route of the vehicle) are notified to know the current road environment information, thereby realizing the collaborative perception of the dangerous situation on the road and timely providing a variety of collision warning information to prevent the occurrence of road traffic accidents, which becomes a new idea of trying to solve the road traffic safety problems in various countries at present. Among them, how to coordinate the relationship between the entity unit and the RSU in the wireless cellular network, how to recognize the RSU by the terminal, and how to communicate with the RSU, are problems to be solved urgently.

This section provides background information related to the present disclosure which is not necessarily prior art.

US20130079040A1 discloses a method and apparatus for a cellular assisted intelligent transportation system. CN104869654A discloses a resource allocation system, base station, device and method. KR1020110065347A discloses an apparatus and a method for vehicle communication handover support. However, the above-mentioned isues are not overcome.

### SUMMARY

According to the present invention, methods for controlling communication in Internet of Vehicles are provided, ad defined in the appended claims.

The following is an overview of the subject matters described in detail in the present disclosure.

This overview is not intended to limit the protection scope of claims.

In the present disclosure, a method and device for controlling communication in Internet of Vehicles is provided to solve at least the problem of large communication power consumption in the related art due to the inability of properly controlling the communication process of Internet of Vehicles.

The embodiments of the present disclosure provide a method for controlling communication in Internet of Vehicles, including: receiving, by a Road Side Unit (RSU), first indication information, wherein the first indication information is used to indicate the RSU to start or stop sending a Vehicle-to-Everything communications (V2X) message; and starting or stopping sending the V2X message in response to the first indication information by the RSU.

The embodiments of the present disclosure also provide a method for controlling communication in Internet of Vehicles, including: sending, by a network device, first indication information to a Road Side Unit (RSU), wherein the first indication information is used to indicate the RSU to start or stop sending a Vehicle-to-Everything communications (V2X) message.

The embodiments of the present disclosure also provide a method for controlling communication in Internet of Vehicles, including: sending, by a terminal, indication information to a Road Side Unit (RSU), wherein the indication information carries at least one of following information: indication information that the terminal is interested in sending and/or receiving the V2X message, a V2X message type that the terminal is interested in or supports, and a V2X service type that the terminal is interested in or supports; and sending and/or receiving, by the terminal, the V2X message.

The embodiments of the present disclosure also provide a method for controlling communication in Internet of Vehicles, including: acquiring, by a terminal, current terminal geographical location information of the terminal and RSU signal coverage information of a Road Side Unit (RSU); determining, by the terminal, whether a distance between the terminal and the RSU is less than or equal to a predetermined threshold value according to the terminal geographical location information and the RSU signal coverage information of the RSU; and if the distance between the terminal and the RSU is less than or equal to the predetermined threshold value, starting to monitor, by the terminal, a V2X message sent by the RSU.

The embodiments of the present disclosure also provide a method for controlling communication in Internet of Vehicles, including: detecting current terminal geographical location information of a terminal; determining whether the terminal enters a predetermined area according to the terminal geographical location information, wherein the terminal located in the predetermined area may receive a Vehicle-to-Everything communications (V2X) message sent by a Road Side Unit (RSU); and if it is determined that the terminal enters the predetermined area, starting to monitor, by the terminal, the V2X message sent by the RSU.

The embodiments of the present disclosure also provide a computer readable storage medium stored with a computer executable instruction that, when being executed, implements the above method for controlling communication in Internet of Vehicles.

The embodiments of the present disclosure also provide an apparatus for controlling communication in Internet of Vehicles, the apparatus being located at a Road Side Unit (RSU), including: a first receiving unit configured to receive first indication information, wherein the first indication information is used to indicate the RSU to start or stop sending a Vehicle-to-Everything communications (V2X) message; and a first sending unit configured to start or stop sending the V2X message in response to the first indication information.

The embodiments of the present disclosure also provide an apparatus for controlling communication in Internet of Vehicles, the apparatus being located at a network device, including: a first sending unit configured to send first indication information to a Road Side Unit (RSU), wherein the first indication information is used to indicate the RSU to start or stop sending a Vehicle-to-Everything communications (V2X) message.

The embodiments of the present disclosure also provide an apparatus for controlling communication in Internet of Vehicles, the apparatus being located in a terminal, including: a first sending unit configured to send indication information to a Road Side Unit (RSU), wherein the indication information carries at least one of following information: indication information that the terminal is interested in sending and/or receiving Vehicle-to-Everything communications (V2X) message, a V2X message type that the terminal is interested in or supports, and a V2X service type that the terminal is interested in or supports; and a transmission unit configured to send and/or receive the V2X message.

The embodiments of the present disclosure also provide an apparatus for controlling communication in Internet of Vehicles, the apparatus being located at a terminal, including: a first acquisition unit configured to acquire current terminal geographical location information of the terminal and RSU signal coverage information of a Road Side Unit (RSU); a determining unit configured to determine whether a distance between the terminal and the RSU is less than or equal to a predetermined threshold value according to the terminal geographical location information and the RSU signal coverage information of the RSU; and a monitoring unit configured to, if the distance between the terminal and the RSU is less than or equal to the predetermined threshold value, start to monitor a Vehicle-to-Everything communications (V2X) message sent by the RSU.

The embodiments of the present disclosure also provide an apparatus for controlling communication in Internet of Vehicles, the apparatus being located in a terminal, including: a detection unit configured to detect current terminal geographical location information of a terminal; a determining unit configured to determine whether the terminal enters a predetermined area according to the terminal geographical location information, wherein the terminal located in the predetermined area may receive a Vehicle-to-Everything communications (V2X) message sent by a Road Side Unit (RSU); and a monitoring unit configured to, if determining that the terminal enters the predetermined area, start to monitor the V2X message sent by the RSU.

By the embodiments of the present disclosure, after receiving the first indication information for indicating the RSU to start or stop sending a Vehicle-to-Everything communications (V2X) message to a terminal, the first indication information being sent by a network device, the Road Side Unit (RSU) starts or stops sending the V2X message to the terminal in response to the first indication information, that is to say, through the above first indication information, it is possible to flexibly control the Road Side Unit (RSU) to start or stop sending the V2X message to the terminal, which overcomes the problem of waste of resources in the related art due to uncontrol of the communication process in Internet of Vehicles, and achieves the purpose of energy saving. Further, by cooperative communication between the Road Side Unit (RSU) and the terminal, it will also help the vehicle to avoid the dangerous area timely, ensure travel safety of traffic participants, and improve the user experience.

After reading and understanding the drawings and detailed descriptions, the other aspects can be understood.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a schematic diagram of a D2D application scenario according to the related art;
Fig. 2 is a flowchart of an alternative method for controlling communication in Internet of Vehicles according to an embodiment of the present disclosure;
Fig. 3(a) is an application scenario diagram of an alternative method for controlling communication in Internet of Vehicles according to an embodiment of the present disclosure;
Fig. 3(b) is an application scenario diagram of another alternative method for controlling communication in Internet of Vehicles according to an embodiment of the present disclosure;
Fig. 4 is a flowchart of another alternative method for controlling communication in Internet of Vehicles according to an embodiment of the present disclosure;
Fig. 5 is a flowchart of another alternative method for controlling communication in Internet of Vehicles according to an embodiment of the present disclosure;
Fig. 6 is a flowchart of another alternative method for controlling communication in Internet of Vehicles according to an embodiment of the present disclosure;
Fig. 7 is a flowchart of another alternative method for controlling communication in Internet of Vehicles according to an embodiment of the present disclosure;
Fig. 8 is a flowchart of another alternative method for controlling communication in Internet of Vehicles according to an embodiment of the present disclosure;
Fig. 9 is a flowchart of another alternative method for controlling communication in Internet of Vehicles according to an embodiment of the present disclosure;
Fig. 10 is a schematic diagram of an alternative apparatus for controlling communication in Internet of Vehicles according to an embodiment of the present disclosure;
Fig. 11 is a schematic diagram of another alternative apparatus for controlling communication in Internet of Vehicles according to an embodiment of the present disclosure;
Fig. 12 is a schematic diagram of another alternative apparatus for controlling communication in Internet of Vehicles according to an embodiment of the present disclosure;
Fig. 13 is a schematic diagram of another alternative apparatus for controlling communication in Internet of Vehicles according to an embodiment of the present disclosure; and
Fig. 14 is a schematic diagram of another alternative apparatus for controlling communication in Internet of Vehicles according to an embodiment of the present disclosure.

### DETAILED DESCRIPTION

The implementation of the present disclosure is described with reference to the accompanying drawings. It is to be explained that, in case of no conflict, the embodiments and various manners in the embodiments in the present disclosure may be combined with each other.

It needs to be explained that the terms "first", "second" and so on in the present disclosure are used to distinguish similar objects from each other, instead of describing a specific sequence or order.

### First embodiment

In this embodiment, an optional method for controlling communication in Internet of Vehicles is provided. Fig. 2 is a flow chart of an optional method for controlling communication in Internet of Vehicles according to an embodiment of the present disclosure.

As shown in Fig. 2, the method includes the following steps.

In S202, a Road Side Unit (RSU) receives first instruction information, the first instruction information being used to instruct the RSU to start or stop sending a V2X message.

In S204, the RSU starts or stops sending the V2X message in responce to the first indication information.

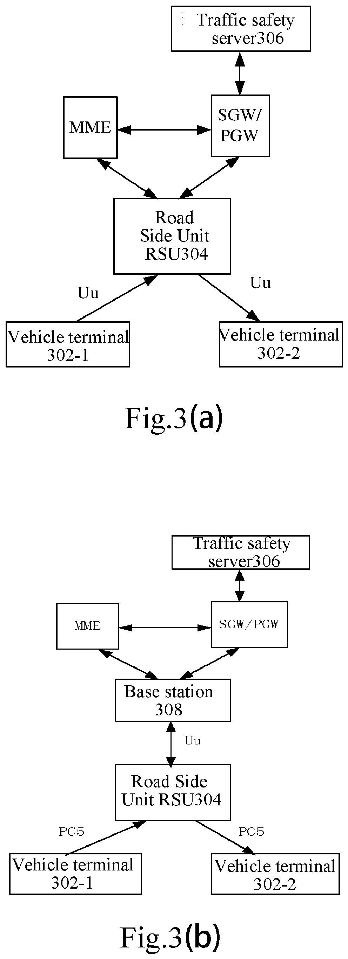

Alternatively, in this embodiment, the method for controlling communication in Internet of Vehicles may be applied to application environments shown in Fig. 3(a) or Fig. 3(b), but the present disclosure is not limited thereto. In Fig. 3(a), a vehicle terminal 302-1 and a vehicle terminal 302-2, after accessing to a mobile communication network by a Road Side Unit (RSU) 304 to achieve communication with a Mobility Management Entity (MME) and a Packet Data Network Gateway (PGW)/Serving GateWay (SGW) in a mobile communication network, further communicate with a traffic safety server 306. In the application environment shown in Fig. 3(b), a base station 308 is added in the communication process, and the communication process of the Fig. 3(b) is no longer described herein. Specifically, after receiving the first indication information for indicating to start or stop sending the V2X message, the Road Side Unit (RSU) controls the RSU to start or stop sending the V2X message according to the first indication information, so as to reasonably control the RSU to start or stop sending the V2X message to a terminal during the Internet of Vehicle communication. Therefore, the power consumption of the two communication parties can be greatly saved, thus overcoming the problem of large communication power consumption in the related art which is generated because the communication process of Internet of Vehicles cannot be reasonably controlled, so as to achieve the effect of saving energy.

Alternatively, in this embodiment, the V2X (Vehicle-to-Everything) message sent by the Road Side Unit (RSU) to the terminal may include at least one of the following types: a Vehicle-to-Vehicle Communications (V2V) message, a Vehicle-to-Infrastructure Communications (V2I) message, and a Vehicle-to-Pedestrian Communications (V2P) message.

Alternatively, in the present embodiment, the above RSU receiving the first indication information may include, but is not limited to, receiving the first indication information sent by a network device. The first indication information may be sent by a system message, or the first indication information may be sent by a proprietary message. The above network device may include, but is not limited to, at least one of the following: a base station, a Proximity Services (ProSe) functional unit, a V2X functional unit, and other network element that executes a Direct to Direct (D2D) relay configuration function. The ProSe function unit may be a functional entity that is set up to authorize the terminal and participate in controlling the terminal to perform a proximity communication behavior. The above V2X functional unit may be a functional entity that is set up to authorize the terminal and participate in controlling the terminal to perform the V2X communication behavior.

Alternatively, in this embodiment, before the Road Side Unit (RSU) receives the first indication information sent by the network device, the method may further include: the RSU sending RSU signal coverage information of the RSU to the network device. The RSU signal coverage information may include at least one of the following: geographical location information of the RSU; the geographical location information of the RSU and signal coverage level indication information of the RSU; and the geographical location information of the RSU and transmission power level indication information of the RSU.

It should be explained that in this embodiment, the above signal coverage level indication information of the RSU and the transmission power level indication information of the RSU may be used to, but is not limited to, indicate the signal coverage area of the RSU. The above signal coverage area will serve as a communication range of the RSU.

Alternatively, in this embodiment, the terminal that receives the V2X message of the RSU may include, but is not limited to, at least one of the following: a terminal located closest to the RSU; and a terminal located within a signal coverage of the RSU. That is, the terminal may receive (i.e., monitor) the V2X message sent by the RSU closest to the terminal, or receive the V2X message sent by the RSU corresponding to the signal coverage where the terminal is located.

When the first manner is adopted, the network device may compare the distances between the terminal and multiple RSUs to select the RSU closest to the terminal, then send, to the RSU closest to the terminal, the first indication information for indicating the RSU to start or stop sending the V2X message to the terminal, so as to achieve the purpose of flexibly controlling whether to send the V2X message to the terminal. Optionally, when the second manner is adopted, the network device may determine, by using the signal coverage of the RSU, the current location of the terminal is located in the signal coverage of which of the RSUs, then send to the corresponding RSU the first indication information for indicating to start or stop sending the V2X message to the terminal, so as to achieve the purpose of flexibly controlling whether to send the V2X message to the terminal.

Alternatively, in the present embodiment, the RSU sends the RSU signal coverage information of the RSU to the network device, which may include, but not limited to, at least one of the following manners:
the RSU sends detected RSU signal coverage information of the RSU to the network device via a server of Internet of Vehicles; and
the RSU sends the detected RSU signal coverage information of the RSU directly to the network device.

Optionally, in this embodiment, when the RSU receives the first indication information, the method may further include: receiving timeout information of a timer. The timeout information of the timer may be used to indicate timeout (overtime time) T of sending the V2X message by the RSU. That is to say, after the timer of the RSU reaches the above timeout T, the sending of V2X message will be stopped.

Optionally, in this embodiment, the way that the RSU obtains the timeout information of the timer may include at least one of the following: the RSU receives timeout information of the timer sent by the network device, and the RSU preconfigures timeout information of the timer.

Specifically, explainations will be given with reference to the following examples. When the RSU receives the first indication information, the RSU receives the timeout information of the timer at the same time, so that a start moment of the timer in the RSU is updated. For example, it is assumed that after the timer expires, no further first indication information for instructing to start sending the V2X message to the terminal is received, the RSU stops sending the V2X message to the terminal. For another example, before the timer expires, if the RSU receives the first indication information for instructing to start sending the V2X message to the terminal again, the RSU clears the timer and updates the start moment of the timer, thus the timeout time for sending the V2X message by the RSU is started to be recorded from the updated start moment.

By the embodiments of the present disclosure, after receiving the first indication information for instructing the RSU to start or stop sending a V2X message to a terminal, in response to the first indication information, the Road Side Unit (RSU) starts or stops sending the V2X message to the terminal, that is to say, the first indication information is used to realize the flexible control of the Road Side Unit (RSU) to start or stop sending the V2X message to the terminal, so as to realize the reasonable control of RSU to start or stop sending the V2X message to the terminal during the communication process of Internet of Vehicles, which can greatly save the power consumption of communication between the two sides, thus overcoming the problem of large communication power consumption in the related art due to the communication process beyond the reasonable control in Internet of Vehicles, so as to achieve energy-saving effect.

As an optional scheme, before the RSU receives the first instruction information sent by the network device, the method may further include the following steps.

In S1, the RSU sends RSU signal coverage information of the RSU to the network device. Alternatively, in this embodiment, the RSU signal coverage information may include at least one of the following: geographical location information of the RSU; the geographical location information and signal coverage level indication information of the RSU; and the geographical location information of the RSU and transmission power level indication information of the RSU.

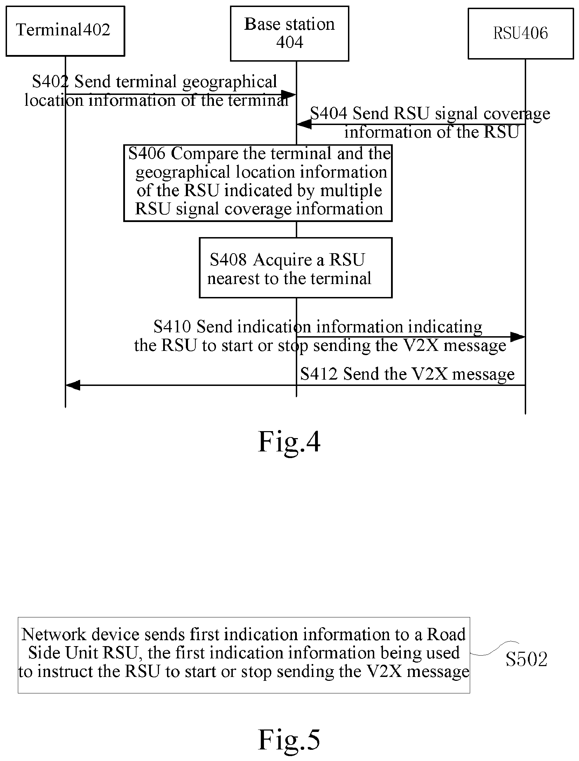

Illustrations are given in combination with the example shown in Fig. 4. For example, the above network device is a base station, and it is assumed that an RSU closest to the terminal is selected to send the V2X message. As shown in Fig. 4, in steps S402-S412, the base station 404 acquires terminal geographical location information of the terminal 402 and RSU signal coverage information of the RSU 406, and obtains the RSU closest to the terminal 402 by comparing the terminal 402 and the geographical location information of the RSUs indicated by the signal coverage information of multiple RSUs. It is assumed that the RSU 406 is the closest RSU from the terminal 402, then the base station 404 sends to the RSU 406 an indication message for instructing the RSU to start or stop sending the V2X message, so that the RSU 406 sends the V2X message to the terminal 402.

Through the embodiments of the present disclosure, the RSU sends the RSU signal coverage information of the RSU to the network device, so that the network device selects an RSU for communicating with the terminal, where the RSU signal coverage information may include at least one of the following: geographical location information of the RSU; the geographical location information of the RSU and signal coverage level indication information of the RSU; and the geographical location information of the RSU and transmission power level indication information of the RSU. Therefore, an RSU matching the terminal is selected to send the V2X message to the terminal, so as to avoid the problem of low communication efficiency caused by the poor communication effect between the RSU and the terminal.

Further, the selected RSU is utilized to send the V2X message to the terminal, which also achieves the effect of greatly reducing communication power consumption.

As an optional solution, the sending, by the RSU, the RSU location information of the RSU to the network device may include at least one of the following steps.

In S1, the RSU sends detected RSU signal coverage information of the RSU to the network device through a server of Internet of Vehicles.

In S2, the RSU sends the detected RSU signal coverage information of the RSU directly to the network device.

With the embodiments of the present disclosure, the RSU location information of the RSU is obtained through different manners so that the network device can select an RSU that matches the terminal for communicating therewith, so as to ensure effective control of communication in Internet of Vehicles through the RSU, thereby achieving energy-saving effect.

As an optional solution, when the RSU receives the first indication information, the method may further include:
S1, the RSU receiving timeout information of a timer sent by the network device; or
S2, the RSU pre-configuring timeout information of a timer.

Optionally, in this embodiment, when the RSU receives the first indication information, the RSU may also receive timeout information that is sent simultaneously with the first indication information by the network device; or obtain the timeout information of a timer preconfigured by the RSU per se, but the present disclosure is not limited thereto. The above-mentioned timeout information of the timer may be used to indicate the timeout T.

With the embodiments of the present disclosure, a timer is set in the RSU, and when the first indication information is received, the timeout information of the timer is acquired, to implement timing control for sending the V2X message by the RSU, so as to avoid the problems of waste of resources and poor user experience due to sending the V2X message to the terminal during a long period, thereby reducing communication power consumption and saving energy.

As an optional solution, the RSU starts or stops sending the V2X message in response to the first indication information may include:
S1, when the first indication information instructs the RSU to start sending the V2X message to the terminal, the RSU starting to send the V2X message and starts a timer to start counting; and
S2, after the timer reaches the timeout T indicated by the timeout information, the RSU stopping sending the V2X message to the terminal; alternatively, before the timer reaches the timeout T indicated by the timeout information, if the RSU receives the indication information indicating the RSU to start sending the V2X message to the terminal, the RSU restarting the timer to clear the timer.

For example, when the RSU receives the first indication information that instructs the RSU to start sending the V2X message, the corresponding timeout information of the timer is acquired at the same time for indicating the timeout T of sending the V2X message by the RSU. Specifically, when the RSU starts to send the V2X message, it restarts the timer at the same time, updates the start time of the timer according to the timeout information of the timer, and initiates the sending of the V2X message to the terminal. Further, after the timer expires (that is, reaches an end time), if no new first indication information indicating that the RSU starts to send the V2X message is received, then the RSU is controlled to stop sending the V2X message to the terminal. For example, if the RSU receives new first indication information for instructing the RSU to start sending the V2X message to the terminal before the timer reaches the timeout T indicated by the timeout information, the RSU restarts the timer so that the timer is cleared and the start time is updated, thereby controlling a time period of the RSU for sending the V2X message to the terminal by using the updated timeout time.

Through the embodiments of the present disclosure, the timer is set to implement the timing control of sending the V2X message by the RSU to avoid waste of resources and poor user experience caused by sending the V2X message to the terminal for a long time, so as to reduce communication power consumption and save energy.

Through the description of the foregoing implementation manners, those skilled in the art can clearly understand that the method according to the foregoing embodiments may be implemented by means of software plus a necessary universal hardware platform, and may also be implemented by hardware. Based on this understanding, the technical solutions of the embodiments of the present disclsoure essentially, or the part contributing to the related art, may be embodied in the form of a software product stored in a storage medium (such as a Read-Only Memory (ROM), a Random Access Memory (RAM), a magnetic disk, and an optical disk), the storage medium including several instructions for enabling a terminal device (which may be a mobile phone, a computer, a server, or a network device) to perform the method according to the embodiments of the present disclosure.

### Second embodiment

In this embodiment, an optional method for controlling communication in Internet of Vehicles is also provided. Fig. 5 is a flowchart of another alternative method for controlling communication in Internet of Vehicles according to an embodiment of the present disclosure.

As shown in Fig. 5, the method includes the following steps.

In S502, a network device sends first indication information to a Road Side Unit (RSU), the first indication information being used to instruct the RSU to start or stop sending the V2X message.

Optionally, in this embodiment, the method for controlling the communication in Internet of Vehicles may be applied in an application environment as shown in Fig. 3(a) or Fig. 3(b), but the present disclosure is not limited thereto. In Fig. 3(a), the vehicle terminal 302-1 and the vehicle terminal 302-2 access the mobile communication network through the Road Side Unit (RSU) 304 to implement communication with the mobility management unit MME and the gateway PGW/SGW in the mobile communication network, and then further communicate with the traffic safety server 306. However, in the application environment shown in Fig. 3(b), a base station 308 is added in the communication process. The details of the communication process in Fig. 3(b) will not be described again. Specifically, the network device sends, to the Road Side Unit (RSU), a message for instructing the RSU to start or stop sending the V2X message, then the RSU controls the RSU to start or stop sending the V2X message according to the instruction of the foregoing first indication information, so as to reasonably control the RSU to start or stop sending the V2X message to the terminal in the communication process of Internet of Vehicles. In this way, the power consumption of both communication parties can be saved to a maximum degree, and the problem of large communication power consumption in the related art due to that the communication process of Internet of Vehicles cannot be reasonably controlled can be solved, and then the effect of energy saving can be achieved. The above network device may include, but is not limited to, at least one of the following: a base station, a ProSe function unit, a V2X function unit, and other network elements that perform D2D relay configuration function. In this embodiment, the network device is not limited.

Optionally, in this embodiment, the V2X (Vehicle-to-Everything) message sent by the Road Side Unit (RSU) to the terminal may include at least one of the following: a Vehicle-to-Vehicle Communications (V2V) message, a Vehicle-to-Infrastructure Communications (V2I) message, and a Vehicle-to-Pedestrian Communications (V2P) message.

Optionally, in this embodiment, sending the first indication information to the Road Side Unit (RSU) by the network device may include the following step.

In S1, the network device sends a system message or an RRC-specific message carrying the first indication information.

Optionally, in this embodiment, before the network device sends the first indication information to the RSU, the method may further include the following steps.

In S1, RSU signal coverage information of the RSU is obtained.

In S2, terminal geographical location information reported by the terminal is received.

Optionally, in this embodiment, the RSU signal coverage information may include at least one of the following: geographical location information of the RSU; the geographical location information of the RSU and signal coverage level indication information of the RSU; and the geographical location information of the RSU and transmission power level indication information of the RSU.

It should be noted that the signal coverage of the RSU indicated by the signal coverage information of the RSU and the terminal are compared by using the foregoing information to find the RSU matching with the terminal and control the RSU to start or stop transmitting the V2X message to the terminal, so as to realize the energy-saving control of communication in Internet of Vehicles. For example, the RSU nearest to the terminal is selected to perform Internet of Vehicles communication with the terminal, which avoids unnecessary message forwarding, greatly reducing communication power consumption and thereby achieving energy saving.

The explainations are given in detail in combination with the example shown in Fig. 4. As an example, the above network device is the base station, and it is supposed that the RSU nearest to the terminal is selected to send the V2X message. As shown in Fig. 4, in steps S402-S412, the base station 404 obtains terminal geographical location information of the terminal 402 and RSU signal coverage information of the RSU 406, by comparing the terminal 402 and the geographical location information of the RSUs indicated by multiple RSU signal coverage information, the RSU nearest to the terminal 402 is obtained, and assuming that the RSU 406 is the RSU nearest to the terminal 402, the base station 404 may send to the RSU 406 indication information indicating the RSU to start or stop sending the V2X message, so that the RSU 406 sends the V2X message to the terminal 402.

Alternatively, in this embodiment, before the network device sends to the Road Side Unit (RSU) the first indication information, the method may further include: the network device receiving third indication information sent by the RSU, the third indication information being used to indicate a V2X message type or a V2X service type supported by the RSU. The V2X message type or V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Optionally, in this embodiment, the network device may choose the RSU based on the distances from the terminal and according to the V2X message type or V2X service type that the terminal is interested in or supports, including at least one of the following ways:
1) the network device determines the RSU nearest to the terminal based on the terminal geographical location information and the RSU signal coverage information, and sends first indication information to the RSU which is nearest to the terminal and supports the V2X message type or V2X service type including the V2X message type or V2X service type that the terminal is interested in or supports; and
2) the network device sends first indication information to the RSU with the RSU signal coverage including the terminal and supporting the V2X message type or V2X service type which includes the V2X message type or V2X service type that the terminal is interested in or supports.

Alternatively, in this embodiment, before the network device sends the first indication information to the Road Side Unit (RSU), the method may further include: sending timeout information of a timer to the RSU, the timeout information of the timer being used for indicating timeout T of the timer in the RSU.

That is to say, after the timer of the RSU reaches the above timeout T, the sending of the V2X message is stopped. In this way, the timing control of sending the V2X message to the terminal by the RSU is realized, so as to avoid the problem of energy waste caused by sending the V2X message for a long time.

By the embodiments of the present disclosure, the network device sends to a Road Side Unit (RSU) indication information for instructing an RSU to start or stop sending a V2X message, so that the RSU controls the RSU to start or stop sending the V2X message in accordance with the instruction of the above first indication information, so as to reasonably control the RSU to start or stop sending the V2X message to the terminal during the Internet of Vehicle communication. Therefore, the power consumption of the two communication parties can be greatly saved, thus overcoming the problem of large communication power consumption in the related art which is generated because the communication process in Internet of Vehicles cannot be reasonably controlled, so as to achieve the effect of saving energy.

As an alternative, before the network device sends the first indication information to the Road Side Unit (RSU), the method may further include the following steps.

In S1, the network device receives second indication information sent by the terminal, the second indication information carrying with at least one of the following information: indication information for indicating whether the terminal is interesting and/or not interesting in sending and/or receiving the V2X message, and indication information for indicating a V2X message type or V2X service type that the terminal is interested in or supports.

Optionally, in this embodiment, the second indication information may include at least one of the following: a RSU discovery message, a discovery reference signal, a D2D discovery message and a D2D communication message. The discovery reference signal may be a physical layer reference signal.

It is to be explained that the contents of the above second indication information may be as follows.
1) The above RSU discovery message may carry indication information for indicating an interest in V2X messages, or indication information of the V2X message type and/or the V2X service type that is interested in or supported by the terminal, but is not limited thereto.
2) The above discovery reference signal may be, but is not limited to, the physical layer reference signal, which is used to indicate interest in the V2X message.
3) The above D2D discovery message may include, but is not limited to: sending the D2D discovery message through a D2D discovery mechanism, the discovery message carrying indication information indicating an interest in the V2X message, or indication information of the V2X message type and/or V2X service type that the terminal is interested in or supports.
4) The above D2D communication message may include, but is not limited to: sending the D2D communication message through the D2D communication mechanism, the communication message carrying the indication information indicating an interest in the V2X message, or indication information of the V2X message type and/or V2X service type that is interested in or supported by the terminal.

By the embodiments of the present disclosure, the network device receives the second indication information sent by the terminal, so that the terminal controls whether to send to the RSU the first indication information for indicating the RSU to start or stop sending the V2X message, which is convenient for the terminal to monitor timely the V2X message sent by a corresponding RSU during communication process in Internet of Vehicles.

As an optional scheme, before the network device sends the first indication information to the RSU, the method may further include the following steps.

In S1, the network device obtains RSU signal coverage information of the RSU.

Alternatively, in this embodiment, the RSU signal coverage information may include: geographical location information of the RSU; or the geographical location information of the RSU and signal coverage level indication information of the RSU; or, the geographical location information of the RSU and transmission power level indication information of the RSU.

Combined with the example shown in Fig. 4, the network device is the base station for example, and it is supposed that the RSU having a smallest distance to the terminal is selected to send the V2X message. As shown in Fig. 4, in steps S402-S412, the base station 404 obtains terminal geographical location information of the terminal 402 and RSU signal coverage information of RSU 406, by comparing the terminal 402 and the geographical location information of the RSUs indicated by multiple RSU signal coverage information, the RSU nearest to the terminal 402 is obtained, and assuming that the RSU 406 is the RSU having a smallest distance to the terminal 402, the base station 404 may send to the RSU 406 indication information for indicating the RSU to start or stop sending the V2X message, so that the RSU 406 sends to the terminal 402 the V2X message.

Through the embodiments of the present disclosure, the RSU sends the RSU signal coverage information of the RSU to the network device so that the network device selects the RSU for communication with the terminal. In this way, the RSU which is properly matching with the terminal is selected for sending the V2X message to the terminal, so as to avoid the problem of low communication efficiency due to the poor communication between the RSU and the terminal. Further, by using the selected RSU to send the V2X message to the terminal, the communication power consumption can be greatly reduced.

As an alternative, the obtaining of the RSU signal coverage information of the RSU may include:
S1, the network device obtaining RSU signal coverage information of multiple RSUs through a server of Internet of Vehicles; or
S2, the network device receiving the RSU signal coverage information sent by the RSU; or
S3, the network device obtaining the RSU signal coverage information through a configuration of a network management device.

It needs to be explained that the above network management device is an OAM (operation and maintenance), and may be configured as a functional entity configuring network management parameters.

Through the embodiments of the present disclosure, the RSU location information of the RSU is obtained through different ways, so that the network device can select the RSU that matches the terminal well for communication, so as to ensure the effective control of the communication in Internet of Vehicles through the RSU, thereby achieving the effect of energy saving.

As an optional scheme, when the network device acquires the RSU signal coverage information of the RSU, the method may further include the following steps.

In S1, the network device receives the terminal geographical location information that is reported by the terminal.

As an optional scheme, after the network device receives the terminal geographical location information reported by the terminal, the method may further include:
S1, the network device determining the nearest RSU from the terminal according to the terminal geographical location information and the RSU signal coverage information, and sending the first indication information to the nearest RSU from the terminal, or
S2, the network device sending the first indication information to the RSU with the signal coverage range indicated by the RSU signal coverage information in which the terminal is included.

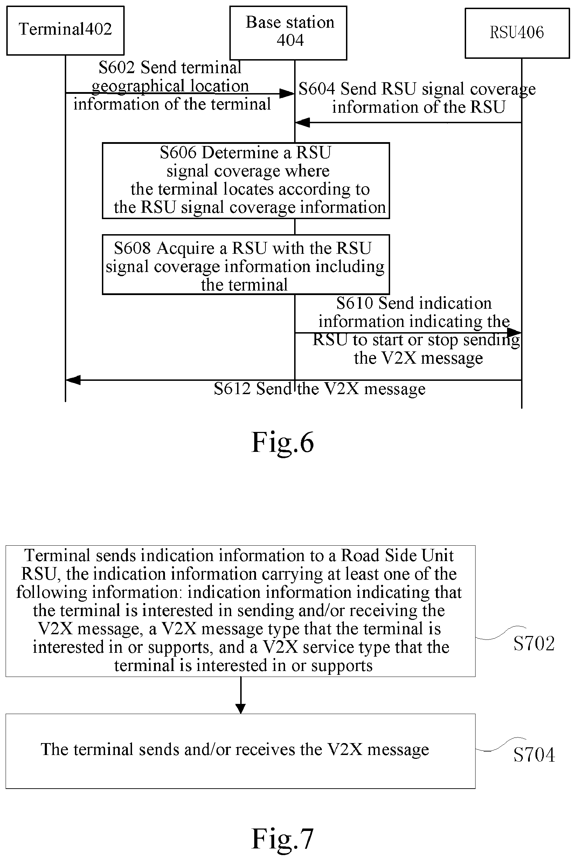

Combined with the example shown in Fig. 6, the above network device is a base station for example, and it is assumed that the RSU with the signal coverage of the RSU including the terminal is selected for sending the V2X message. As shown in Fig. 6, in steps S602-S612, the base station 404 obtains the terminal geographical location information of the terminal 402 and the RSU signal coverage information of the RSU 406, determines the RSU signal coverage where the terminal 402 locates according to the RSU signal coverage information, and obtains the RSU with the RSU signal coverage including the terminal. Assuming that the RSU including the terminal is RSU 406, then the base station 404 may send to the RSU 406 the indication information indicating the RSU to start or stop sending the V2X message, so as to enable the RSU 406 to send the V2X message to the terminal 402.

Through the embodiments of the present disclosure, the RSU which is better matched with the terminal is selected for sending the V2X message to the terminal, so as to avoid the problem of low communication efficiency caused by the poor communication effect between the RSU and the terminal. Further, the selected RSU is utilized to send the V2X message to the terminal, which can greatly reduce the communication power consumption.

As an alternative, before the network device sends the first indication information to the Road Side Unit (RSU), the method may further include the following steps.

In S1, the network device receives third indication information sent by the RSU, the third indication information being used to indicate a V2X message type or a V2X service type supported by the RSU.

As an alternative, the step of sending the first indication information to the Road Side Unit (RSU) by the network device may include:
S1, the network device determining an RSU nearest to the terminal based on the terminal geographical location information and the RSU signal coverage information, and sends first indication information to the RSU nearest to the terminal and supporting the V2X message type or V2X service type including the V2X message type or V2X service type that is interested in or supported by the terminal; or
S2, the network device sending the first instruction information to the RSU with the RSU signal coverage including the terminal and supporting the V2X message type or the V2X service type including the V2X message type or the V2X service type that the terminal is interested in or supports.

Alternatively, in this embodiment, the V2X message type or V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

In the embodiments of the present disclosure, the network device chooses the RSU based on the distance between the network device and the terminal, and according to the V2X message type or V2X service type that the terminal is interested in or supports. In this way, the RSU which is more matched with the terminal can be selected, thus reducing unnecessary message forwarding. On the premise of guaranteeing the communication effect, the communication efficiency is improved and the power consumption of communication is reduced.

As an alternative, before the network device sends the first indication information to the Road Side Unit (RSU), the method may further include the following steps.

In S1, the network device sends timeout information of a timer to the RSU, and the timeout information of the timer is used to indicate timeout T of the timer in RSU, so that the RSU may start or stop sending the V2X message according to the timeout T.

For example, before the timer reaches the timeout T indicated by the timeout information, if the RSU receives new first indication information for instructing the RSU to start sending the V2X message to the terminal, the RSU restarts the timer so that the timer is cleared and the start time is updated, so as to control the duration of sending the V2X message to the terminal by the RSU using the updated timeout time.

Through the embodiments of the present disclosure, a timer is set to implement a timing control on sending the V2X message by the RSU, so as to avoid waste of resources and poor user experience caused by sending the V2X message to the terminal for a long time, thereby reducing communication power consumption and saving the energy.

### Third embodiment

In this embodiment, a method for controlling communication in Internet of Vehicles is also provided. Fig. 7 is a flowchart of another alternative method for controlling communication in Internet of Vehicles according to an embodiment of the present disclosure. As shown in Fig. 7, the method includes the following steps.

In S702, a terminal sends indication information to a Road Side Unit (RSU), wherein the indication information carries at least one of the following information: indication information indicating that the terminal is interested in and/or not interested in sending and/or receiving the V2X message, and a V2X message type that the terminal is interested in or supports or a V2X service type that the terminal is interested in or supports.

In S704, the terminal sends and/or receives the V2X message.

Optionally, in this embodiment, the method for controlling the communication in Internet of Vehicles may be applied in an application environment as shown in Fig. 3(a) or Fig. 3(b), but the present disclosure is not limited thereto. In Fig. 3(a), after the vehicle terminal 302-1 and the vehicle terminal 302-2 access the mobile communication network through the Road Side Unit (RSU) 304 to realize communication with the mobility management unit MME and the gateway PGW/SGW in the mobile communication network, the vehicle terminal 302-1 and the vehicle terminal 302-2 further communicate with the traffic safety server 306. While in the application environment shown in Fig. 3(b), a base station 308 is added in the communication process. The details of the communication process in Fig. 3(b) will not be described again. Specifically, the terminal sends indication information to the Road Side Unit (RSU), where the indication information may carry at least one of the following information: indication information that the terminal is interested in sending and/or receiving of the V2X message, a V2X message type that the terminal is interested in or supports, and a V2X service type that the terminal is interested in or supports, so that the RSU sends the V2X message to the terminal according to the above indication information. Therefore, it is possible to reasonably control the RSU to start or stop sending the V2X message to the terminal in the communication process of Internet of Vehicles, so as to save the power consumption of the communication parties to a great extent, and then overcome the problem of large communication power consumption in the related art due to that the communication process of the Internet of Vehicles can not be reasonably controlled, and achieve energy-saving effect.

It should be noted that, in this embodiment, the receiving, by the terminal, the V2X message sent by the RSU may also be implemented as that the terminal monitors the V2X message sent by the RSU, which is not limited in this embodiment.

Optionally, in this embodiment, the V2X (Vehicle-to-Everything) message sent by the Road Side Unit (RSU) to the terminal may include at least one of the following: a Vehicle-to-Vehicle Communications (V2V) message, a Vehicle-to-Infrastructure Communications (V2I) message, and a Vehicle-to-Pedestrian Communications (V2P) message.

Optionally, in this embodiment, the foregoing terminal may include, but not limited to, at least one of the following: a connected state terminal and an idle state terminal.

Optionally, in this embodiment, the foregoing V2X message type or V2X service type may include at least one of the following: an auto-park system service type, an emergency stop indication service type, a queue alarm service type, a road safety service business type, a curve travelling warning service type, an emergency service type, a non-emergency service type, a safety service type, and a commercial service type.

Optionally, in this embodiment, the above indication information may include at least one of the following: an RSU discovery message, a discovery reference signal, a D2D discovery message, and a D2D communication message. Specifically, the contents of the above indication information may be as follows:
1) The RSU discovery message may carry indication information indicating an interest in a V2X message, or indication information of a V2X message type and/or a V2X service type that the terminal is interested in or supports, but is not limited thereto.
2) The foregoing discovery reference signal may be, but not limited to, a physical layer reference signal, for indicating that it is interested in a V2X message.
3) The foregoing D2D discovery message may include, but is not limited to, sending a D2D discovery message through a D2D discovery mechanism, where the discovery message carries indication information indicating an interest in the V2X message, or indication information of a V2X message type and/or a V2X service type that the terminal is interested in or supports.
4) The foregoing D2D communication message may include, but not limited to, sending a D2D communication message through a D2D communication mechanism, where the communication message carries indication information indicating an interest in the V2X message, or indication information of a V2X message type and/or a V2X service type that the terminal is interested in or supports.

Through the embodiments of the present disclosure, the terminal sends indication information to the RSU, where the indication information may carry at least one of the following information: indication information that the terminal is interested in sending and/or receiving of the V2X message, a V2X message type that the terminal is interested in or supports, and a V2X service type that the terminal is interested in or supports, so that the RSU sends the V2X message to the terminal according to the above indication information, thereby enabling the terminal to control whether the RSU sends the foregoing V2X message.

As an optional solution, before the terminal sends the indication information to the Road Side Unit (RSU), the method may further include the following steps.

In S1, the terminal receives resource configuration information of the indication information sent by the network device, the resource configuration information including time-frequency resource configuration information and period configuration information.

Optionally, in this embodiment, the foregoing time-frequency resource configuration information may be used to send a V2X message at a frequency and a subframe position indicated by the time-frequency resource.

Optionally, in this embodiment, the period configuration information may include long period configuration information and short period configuration information, and the sending, by the terminal, the indication information to the Road Side Unit (RSU) may include the following steps.

In S1, when the V2X message sent by the RSU is detected by the terminal, the terminal sends the indication information according to the long period configuration information.

In S2, when the V2X message sent by the RSU is not detected by the terminal, the terminal sends the indication information according to the short period configuration information.

The explainations will be given with reference to the following examples. If the terminal detects that an RSU sends a V2X message, the terminal may send indication information to the network device according to the long period configuration information with a relatively long period to ensure timely monitoring of the V2X message sent by the above RSU. In addition, if the V2X message sent by the RSU is not detected by the terminal, that is, currently the terminal does not need to occupy communication resources for a long time, it only needs to send the indication information in a short period.

According to the embodiments of the present disclosure, the indication information is sent depending on different needs according to different periods, which further ensures the flexibility of sending the indication information to save energy, and avoids the problem of waste of communication resources caused by long-term occupation.

### Fourth embodiment

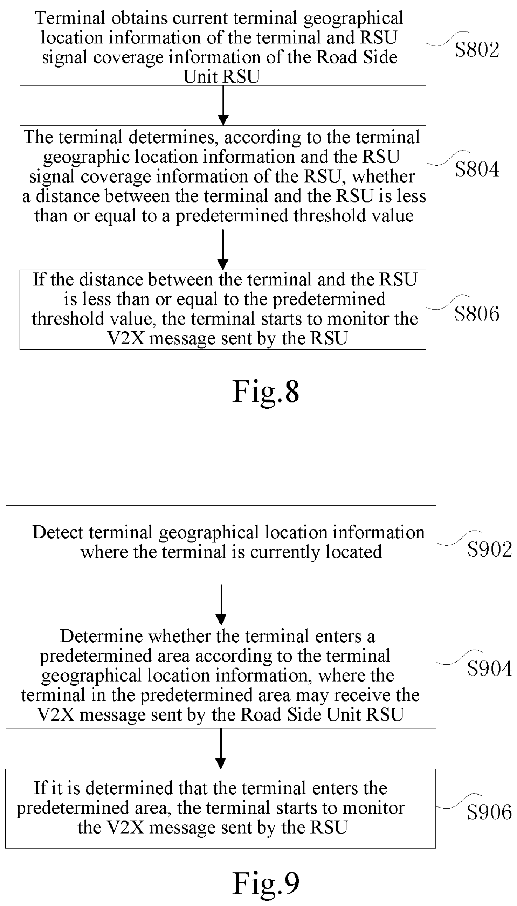

In this embodiment, an optional method for controlling communication in Internet of Vehicles is further provided. Fig. 8 is a flowchart of another alternative method for controlling communication in Internet of Vehicles according to an embodiment of the present disclosure. As shown in Fig. 8, the method includes the following steps.

In S802, a terminal obtains current terminal geographical location information of the terminal and RSU signal coverage information of a Road Side Unit (RSU).

In S804, the terminal determines, according to the terminal geographical location information and the RSU signal coverage information of the RSU, whether a distance between the terminal and the RSU is less than or equal to a predetermined threshold value.

In S806, if the distance between the terminal and the RSU is less than or equal to the predetermined threshold value, the terminal starts to monitor a V2X message sent by the RSU.

Optionally, in this embodiment, for the application scenarios of the method for controlling communication in Internet of Vehicles, reference may be made to the foregoing first to third embodiments, and details will not be described herein again.

It should be noted that, in this embodiment, the first to third embodiments describe the energy saving control of the Internet of Vehicles communication by controlling the RSU. In this embodiment, the energy saving control for Internet of Vehicles communication is realized by controlling energy saving of the terminal. Despite the energy saving control of the RSU or of the terminal, the goal of reducing communication power consumption and energy saving can be achieved. For example, assuming that the terminal and the RSU are both off at an initial state, and the terminal continues to be off when the terminal is outside the coverage of the RSU. When the terminal becomes within the coverage of the RSU, the monitoring may be started. On the other hand, the terminal or the base station may send an indication message to the RSU to request the RSU to start sending or monitoring.

Optionally, in this embodiment, the receiving, by the terminal, the V2X message sent by the RSU may also be expressed as that the terminal monitors the V2X message sent by the RSU, which is not limited in this embodiment.

Optionally, in this embodiment, the above terminal may include, but is not limited to, at least one of the following: a connected state terminal and/or an idle state terminal.

The explainations are given in combination with the following examples. The terminal acquires the current terminal geographical location information of the terminal and the RSU signal coverage information of the Road Side Unit (RSU). The terminal determines whether the distances between the terminal and the multiple RSUs are less than or equal to a predetermined threshold value. If the terminal determines that the distance between the terminal and one of the RSUs is less than or equal to the predetermined threshold value, it is possible to start monitoring of the V2X message sent by the RSU.

Optionally, in this embodiment, the above predetermined threshold value may be configured by the terminal in a Universal Integrated Circuit Card (UICC), but the present disclosure is not limited thereto. Alternatively, the above predetermined threshold value may be obtained by receiving a system message or a Radio Resource Control (RRC) dedicated message sent by the network device, the above message carrying the predetermined threshold value, but the present disclosure is not limited thereto.

Optionally, in this embodiment, before the monitoring of the V2X message is started, the method may further include: acquiring, by the terminal, indication information indicating a V2X message type or a V2X service type supported by the RSU; and determining, by the terminal, whether the V2X message type or the V2X service type supported by the RSU includes the V2X message type or the V2X service type that the terminal is interested in or supports.

That is, before monitoring the V2X message sent by the RSU, in addition to determining whether the distance relative to the RSU satisfies the condition, the terminal may determine whether the received V2X message type or V2X service type supported by the RSU includes the V2X message type or the V2X service type that the terminal is interested in or supports, so as to select the RSU that matches the terminal properly to send the V2X message, thereby avoiding the problem of communication inefficiency caused by poor communication between the RSU and the terminal. However, the present disclosure is not limited thereto.

It should be noted that, the V2X message type or the V2X service type supported by the above RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Through the embodiments of the present disclosure, the terminal selects the RSU that matches the terminal to perform coordinated Internet of Vehicles communications, so as to achieve the purpose of saving bandwidth and avoiding waste of energy by reducing forwarding under the condition of ensuring the communication effect.

As an optional solution, the terminal acquiring the RSU signal coverage information of the RSU may include:
S1, the terminal obtaining RSU signal coverage information through an application layer server; or
S2, the terminal receiving a system message or an RRC-dedicated message that is sent by a network device and carries RSU signal coverage information.

Optionally, in this embodiment, the RSU signal coverage information may include at least one of the following: geographical location information of the RSU; the geographical location information of the RSU and signal coverage level indication information of the RSU; and the geographical location information of the RSU and transmission power level indication information of the RSU.

Optionally, in this embodiment, the V2X message type or V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Through the embodiments of the present disclosure, the RSU location information of the RSU is obtained through different manners so that the network device can select an RSU that matches the terminal well for communication, thus ensuring effective control of communication of the Internet of Vehicles through the RSU and thereby saving energy.

As an optional solution, before the terminal starts to monitor the V2X message, the method may further include at least one of the following steps.

In S1, the terminal pre-configures a predetermined threshold value in a universal integrated circuit card (UICC).

In S2, the terminal receives a system message or an RRC-dedicated message that carries a predetermined threshold value and is sent by the network device.

With the embodiments of the present disclosure, the predetermined threshold value is obtained according to different manners, which further improves the communication efficiency between the terminal and the Internet of Vehicles.

As an optional solution, before the terminal starts the monitoring of the V2X message, the method may further include the following steps.

In S1, the terminal acquires indication information for indicating a V2X message type or a V2X service type supported by the RSU.

As an optional solution, the terminal starting the monitoring of the V2X message sent by the RSU may include the following steps.

In S1, it is determined whether the V2X message type or the V2X service type supported by the RSU includes a V2X message type or a V2X service type that the terminal is interested in or supports.

In S2, if the V2X message type or the V2X service type supported by the RSU includes a V2X message type or a V2X service type that the terminal is interested in or supports, then the terminal starts monitoring the V2X message sent by the RSU.

Through the embodiments of the present disclosure, the terminal selects the RSU matching with the terminal to perform coordinated communication of Internet of Vehicles by comparing the V2X message types or the V2X service types, so as to monitor the corresponding V2X message type or V2X service type according to the preference of the user to improve the user experience.

### Fifth embodiment

In this embodiment, an optional method for controlling communication in Internet of Vehicles is further provided. Fig. 9 is a flowchart of an alternative method for controlling communication in Internet of Vehicles according to an embodiment of the present disclosure.

As shown in Fig. 9, the method includes the following steps.

In S902, terminal geographical location information of a terminal where the terminal is currently located is detected.

In S904, it is determined whether the terminal enters a predetermined area according to the terminal geographical location information, where the terminal in the predetermined area may receive the V2X message sent by a Road Side Unit (RSU).

In S906, if it is determined that the terminal enters the predetermined area, the terminal starts to monitor the V2X message sent by the RSU.

Optionally, in the embodiment, the above predetermined area may include: dangerous/forbidden area, and a designated receiving area for V2X message. The dangerous/forbidden area may include at least one of: an intersection, a sidewalk, and an area through which no pedestrian passes. The above area may be set by an application layer of the terminal.

It should be noted that in this embodiment, the terminal may further directly control the terminal to receive the V2X message sent by the RSU by detecting whether the terminal enters the predetermined area, so as to directly control the terminal to receive the V2X message according to the location information of the area. In this way, it is possible to directly use the area location information to effectively control the Internet of Vehicles communication, so as to avoid the problem of resource waste caused by occupying the communication resources for a long time for receiving (i.e., listening for) the V2X messages sent by the RSU, thereby achieving energy saving.

### Sixth embodiment

In this embodiment, an apparatus for controlling communication in Internet of Vehicles is further provided. The apparatus may be located in a Road Side Unit (RSU). The apparatus is configured to implement the above embodiments and optional embodiments, and the explanations which have been described will not be elaborated here. As used below, the term "module" may be a combination of software and/or hardware that achieves a predetermined function. Although the apparatuses described in the following embodiments may be implemented in software, the implementation of hardware or a combination of software and hardware is also possible and conceived.

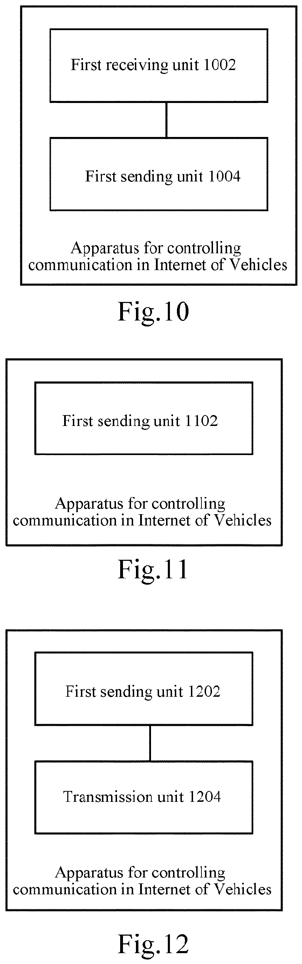

In this embodiment, an optional apparatus for controlling communication in Internet of Vehicles is provided. As shown in Fig. 10, the apparatus may be located in a Road Side Unit (RSU). The apparatus includes:
1) a first receiving unit 1002 configured to receive first indication information, the first indication information being used to instruct the RSU to start or stop sending a V2X message; and
2) a first sending unit 1004 configured to start or stop sending the V2X message in response to the first indication information.

Optionally, in this embodiment, the control apparatus of the Internet of Vehicles communication may be applied in an application environment as shown in Fig. 3(a) or Fig. 3(b), but the present disclosure is not limited thereto. In Fig. 3(a), after the vehicle terminal 302-1 and the vehicle terminal 302-2 access the mobile communication network through the Road Side Unit (RSU) 304 to implement communication with the mobility management unit (MME) and the gateway PGW/SGW in the mobile communication network, the vehicle terminal 302-1 and the vehicle terminal 302-2 further communicate with a traffic safety server 306. However, in the application environment shown in Fig. 3(b), a base station 308 is added in the communication process. The details of the communication process in Fig. 3(b) will not be described again. Specifically, after receiving the first indication information for instructing to start or stop sending the V2X message, the Road Side Unit (RSU) controls the RSU to start or stop sending the V2X message according to the instruction of the above first indication information, so as to reasonably control the RSU to start or stop transmitting the V2X message to the terminal during the communication in Internet of Vehicles so as to save the power consumption of the communication parties to a great extent, thereby overcoming the problem of communication power consumption caused by the unreasonable control over the communication process of Internet of Vehicles in the related art, and thus achieving the energy saving effect.

Optionally, in this embodiment, the V2X (Vehicle-to-Everything) message sent by the Road Side Unit (RSU) to the terminal may include at least one of the following: a Vehicle-to-Vehicle Communications (V2V) message, a Vehicle-to-Infrastructure Communications (V2I) message, and a Vehicle-to-Pedestrian Communications (V2P) message.

Optionally, in this embodiment, the first receiving unit 1002 may include a receiving module configured to receive first indication information sent from a network device. The network device includes at least one of the following: a base station, a ProSe function unit, a V2X function unit and a network element that performs device-to-device control function. The above first indication information may be sent through a system message, or the first indication information may be sent through a dedicated message. The above network device may include, but is not limited to, at least one of the following: a base station, a ProSe function unit, a V2X function unit, and other network elements that perform D2D relay configuration function. The ProSe function unit may be a functional entity configured to authorize the terminal and participate in controlling the terminal to perform proximity communication. The foregoing V2X function unit may be a functional entity that is configured to authorize the terminal and participate in controlling the terminal to perform V2X communication behavior.

Optionally, in this embodiment, before the Road Side Unit (RSU) receives the first indication information sent by the network device, RSU signal coverage information of the RSU is sent to the network device. The RSU signal coverage information may include at least one of the following: geographical location information of the RSU; the geographical location information of the RSU and signal coverage level indication information of the RSU; and the geographical location information of the RSU and transmission power level indication information of the RSU.

It should be noted that, in this embodiment, the signal coverage level indication information of the RSU and the transmission power level indication information of the RSU may be used for indicating a signal coverage of the RSU, but the present disclosure is not limited thereto.

The above signal coverage will be used as a communication range of the RSU.

Optionally, in this embodiment, the terminal that receives the V2X message of the RSU may include, but is not limited to, at least one of the following: a terminal located closest to the RSU; and a terminal located within a signal coverage of the RSU. That is, the terminal may receive (i.e., monitor) the V2X message sent by the RSU closest to the terminal or receive the V2X message sent by the RSU corresponding to the signal coverage where the terminal locates.

When the first manner is adopted, the network device may compare a distance between the terminal and multiple RSUs to select the RSU closest to the terminal, so as to flexibly control whether to send the V2X message to the terminal by sending to the RSU nearest to the terminal first indication information for indicating the RSU to start or stop sending the V2X message to the terminal. Optionally, when the second manner is adopted, the network device may determine, by using the signal coverages of the RSUs, the signal coverage of the RSU in which the terminal is currently located, so as to flexibly control whether to send the V2X message to the terminal by sending to the corresponding RSU first indication signal for indicating to start or stop sending the V2X message to the terminal.

Optionally, in this embodiment, the second sending unit may include at least one of the following:
1) a first sending module, configured to send detected RSU signal coverage information of an RSU to a network device through a server of Internet of Vehicles; and
2) a second sending module, configured to send the detected RSU signal coverage information of the RSU directly to the network device.

Optionally, in this embodiment, when the RSU receives the first indication information, the method further includes: receiving timeout information of a timer, wherein the timeout information of the timer may be used to indicate a timeout T for sending the V2X message by the RSU. That is, after the timer of the RSU reaches the above timeout T, the sending of the V2X message will be stopped.

Optionally, in this embodiment, the manner of obtaining the timeout information of the timer by the RSU may include at least one of the following: the RSU receiveing the timeout information of the timer sent by the network device, and the RSU pre-configuring the timeout information of the timer.

Specifically, the explainations will be given with reference to the following examples. When the RSU receives the first indication information, the RSU receives the timeout information of the timer at the same time, so that a start moment of the timer in the RSU is updated. For example, it is assumed that after the timer expires, no further first indication information for instructing to start sending the V2X message to the terminal is received, the RSU stops sending the V2X message to the terminal. For another example, before the timer expires, if the RSU receives the first indication information for instructing to start sending the V2X message to the terminal, then the RSU clears the timer and updates the start moment of the timer, so that the timeout time for sending the V2X message by the RSU is recorded again from the updated start moment.

With the embodiments of the present disclosure, after receiving the first indication information for instructing the RSU to start or stop sending the V2X message to the terminal, the Road Side Unit (RSU) starts or stops sending the V2X message to the terminal in response to the first indication information, that is, the above first indication information is used to flexibly control the Road Side Unit (RSU) to start or stop sending the V2X message to the terminal, so as to reasonably control the RSU to start or stop sending the V2X message to the terminal in the communication process of Internet of Vehicles. In this way, the power consumption of the two parties in communication is saved to a great extent and the problem of relatively large communication power consumption due to the inability to properly control the communication process of the Internet of Vehicles in the related art is overcome, thereby achieving the energy saving effect.

As an optional solution, the apparatus may further include:
1) a second sending unit configured to: before the RSU receives the first indication information sent by the network device, send RSU signal coverage information of the RSU to the network device.

Optionally, in this embodiment, the RSU signal coverage information may include at least one of the following: geographical location information of the RSU; the geographical location information of the RSU and signal coverage level indication information of the RSU; and the geographical location information of the RSU and transmission power level indication information of the RSU.

Specifically, the explanations will be given in combination with the example shown in Fig. 4.

The base station is used as the above network device as an example, and it is assumed that an RSU closest to the terminal is selected for sending the V2X message. As shown in Fig. 4, in steps S402-S412, the base station 404 acquires the terminal geographical location information of the terminal 402 and RSU signal coverage information of the RSU 406, and obtains the RSU closest to the terminal 402 by comparing the terminal 402 and the geographical location information of the RSU indicated by the signal coverage information of multiple RSUs. Assuming that the RSU 406 is the RSU nearest to the terminal 402, then the base station 404 sends to the RSU 406 indication information for instructing the RSU to start or stop sending the V2X message, so that the RSU 406 sends the V2X message to the terminal 402.

Through the embodiments of the present disclosure, the RSU sends RSU signal coverage information of the RSU to the network device, so that the network device selects an RSU for communicating with the terminal. The RSU signal coverage information may include at least one of the following: geographical location information of the RSU; the geographical location information of the RSU and signal coverage level indication information of the RSU; and the geographical location information of the RSU and transmission power level indication information of the RSU. In this way, by selecting an RSU matching the terminal for sending the V2X message to the terminal, it is possible to avoid the problem of low communication efficiency caused by poor communication between the RSU and the terminal.

Further, sending the V2X message to the terminal by using the selected RSU will also achieve the effect of greatly reducing communication power consumption.

As an optional solution, the second sending unit may include at least one of the following:
1) a first sending module, configured to send detected RSU signal coverage information of an RSU to a network device through a server of Internet of Vehicles; and
2) a second sending module, configured to send the detected RSU signal coverage information of the RSU directly to the network device.

With the embodiments of the present disclosure, RSU location information of the RSU is obtained through different manners so that the network device may select an RSU that matches the terminal more closely for performing communication so as to effectively control the Internet of Vehicles communication through the RSU, thereby achieving energy saving effect.

As an optional solution, the apparatus may further include:
1) a second receiving unit, configured to receive timeout information of a timer sent by the network device when receiving the first indication information; or
2) a configuration unit, configured to pre-configure timeout information of a timer. Optionally, in this embodiment, when the RSU receives the first indication information, the apparatus may further be configured to: when receiving the first indication information sent by the network device, receive the timeout information that is sent at the same time; or acquire the timeout information of a timer pre-configured by the RSU itself. The above-mentioned timeout information of the timer may be used to indicate timeout T.

With the embodiments of the present disclosure, a timer is set in the RSU, and when the first indication information is received, the timeout information of the above timer is acquired, so as to implement timing control of the RSU sending a V2X message, to avoid waste of resources and poor user experience caused by sending the V2X messages to the terminal for a long time, thereby reducing the communication power consumption and saving energy.

As an optional solution, the first sending unit may include:
1) a third sending module, configured to, when the first indication information instructs the RSU to start sending the V2X message to the terminal, start transmitting the V2X message and start a timer to start counting;
2) a control module, configured to, after the timeout T indicated by the timeout information of the timer expires, the RSU stops sending the V2X message to the terminal; or before the timeout T indicated by the timeout information of the timer expires, if the RSU receives indication information for instructing the RSU to start sending the V2X message to the terminal, then restart the timer to clear the timer.

For example, when the RSU receives the first indication information that instructs the RSU to start sending the V2X message, the corresponding timeout information of the timer is acquired at the same time to indicate the timeout T for the RSU to send the V2X message.

Specifically, when the RSU starts to send the V2X message, the timer is restarted at the same time, the start time of the timer is updated according to the timeout information of the timer, and the V2X message is sent to the terminal. Further, after the timer expires (that is, the end time is reached), if no new first indication information indicating the RSU to start sending the V2X message is received, it is possible to control the RSU to stop sending the V2X message to the terminal. For example, if the RSU receives new first indication information for instructing the RSU to start sending the V2X message to the terminal before the timeout T indicated by the timeout information of the timer expires, the RSU restarts the timer so that the timer is cleared and the start time is updated, so as to control the duration of sending the V2X message to the terminal by using the updated timeout time.

Through the embodiments of the present disclosure, a timer is set to implement timing control on sending a V2X message by an RSU, so as to avoid waste of resources and poor user experience caused by sending a V2X message to the terminal for a long time, thereby reducing communication power consumption and saving energy.

### Seventh embodiment

The present embodiment further provides an apparatus for controlling communication in Internet of Vehicles. The apparatus may be located in a network device. The apparatus is configured to implement the foregoing embodiments and alternative embodiments, and details which have been described will not be elaborated here. As used below, the term "module" may be a combination of software and/or hardware that achieves a predetermined function. Although the apparatuses described in the following embodiments may be implemented in software, the implementation of hardware or a combination of software and hardware is also possible and conceived.

The present embodiment provides an optional apparatus for controlling communication in Internet of Vehicles. As shown in Fig. 11, the apparatus may be located in a network device.

The apparatus includes:
1) a first sending unit 1102, configured to send first indication information to a Road Side Unit (RSU), the first indication information being used to instruct the RSU to start or stop sending a V2X message.

Optionally, in this embodiment, the above control of the Internet of Vehicles communication may be applied in an application environment as shown in Fig. 3(a) or Fig. 3(b), but the present disclosure is not limited thereto. In Fig. 3(a), after the vehicle terminal 302-1 and the vehicle terminal 302-2 access the mobile communication network through the Road Side Unit (RSU) 304 to implement communication with the mobility management unit (MME) and the gateway PGW/SGW in the mobile communication network, the vehicle terminal 302-1 and the vehicle terminal 302-2 further communicate with a traffic safety server 306. However, in the application environment shown in Fig. 3(b), a base station 308 is added in the communication process. The details of the communication process in Fig. 3(b) will not be described again. Specifically, the network device sends, to the Road Side Unit (RSU), first indication information for instructing the RSU to start or stop transmitting the V2X message, so that the RSU controls the RSU to start or stop transmitting the V2X message according to the instruction of the foregoing first indication information, so as to reasonably control the RSU to start or stop sending the V2X message to the terminal in the communication process of Internet of Vehicles, thereby saving the power consumption of the communication parties to a greater extent, and overcoming the large communication power consumption caused by the unreasonable control of the communication process of Internet of Vehicles in the related art, in order to achieve energy-saving effect. The network device may include, but is not limited to, at least one of the following: a base station, a ProSe function unit, a V2X function unit, and other network elements that perform D2D relay configuration function, which is not limited in this embodiment.

Optionally, in this embodiment, the V2X (Vehicle-to-Everything) message sent by the Road Side Unit (RSU) to the terminal may include at least one of the following: a Vehicle-to-Vehicle Communications (V2V) message, a Vehicle-to-Infrastructure Communications (V2I) message, and a Vehicle-to-Pedestrian Communications (V2P) message.

Optionally, in this embodiment, the network device sending the first indication information to the Road Side Unit (RSU) may include the following steps.

In S1, the network device sends a system message or an RRC-specific message carrying the first indication information.

Optionally, in this embodiment, before the network device sends the first indication information to the RSU, the method may further include the following steps.

In S1, RSU signal coverage information of the RSU is obtained.

In S2, terminal geographical location information reported by the terminal is received.

Optionally, in this embodiment, the RSU signal coverage information may include at least one of the following: geographical location information of the RSU; the geographical location information of the RSU and signal coverage level indication information of the RSU; and the geographical location information of the RSU and transmission power level indication information of the RSU.

It should be noted that the terminal and the signal coverage of the RSU indicated by the signal coverage information of the RSU are compared by using the foregoing information to find the RSU matching with the terminal and control the RSU to start or stop transmitting the V2X message to the terminal, thereby achieving the energy-saving control of communication in Internet of Vehicles. For example, the RSU nearest to the terminal is selected for performing Internet of Vehicles communication with the terminal, which avoids unnecessary message forwarding, and greatly reduces communication power consumption, thereby achieving energy saving.

Specifically, the explanations will be given in combination with the example shown in Fig. 4.

The base station is used as the above network device for an example, and it is assumed that the RSU closest to the terminal is selected to send the V2X message. As shown in Fig. 4, in steps S402-S412, the base station 404 acquires the terminal geographical location information of the terminal 402 and RSU signal coverage information of the RSU 406, and obtains the RSU closest to the terminal 402 by comparing the terminal 402 and the geographical location information of the RSU indicated by the signal coverage information of multiple RSUs. It is assumed that the RSU 406 is the RSU closest to the terminal 402, the base station 404 sends to the RSU 406 indication information for instructing the RSU to start or stop sending the V2X message, so that the RSU 406 sends the V2X message to the terminal 402.

Optionally, in this embodiment, before the network device sends the first indication information to the Road Side Unit (RSU), the method may further include: receiving, by the network device, third indication information sent by the RSU, the third indication information being used for indicating a V2X message type or a V2X service type supported by the RSU.

The V2X message type or the V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Optionally, in this embodiment, the network device may select the RSU according to a V2X message type or a V2X service type that is of interest to or supported by the terminal based on selecting an RSU depending on a distance from the terminal, which may include at least one of the following ways:
1) the network device determines the RSU nearest to the terminal according to the terminal geographical location information and the RSU signal coverage information, and sends the first indication information to the RSU nearest to the terminal and supporting the V2X message type or V2X service type including the V2X message type or the V2X service type that the terminal is interested in or that is supported by the terminal; and
2) the network device sends the first indication information to an RSU with the RSU signal coverage within which the terminal is located and supporting the V2X message type or V2X service type including the V2X message type or the V2X service type that the terminal is interested in or that is supported by the terminal.

Optionally, in this embodiment, before the network device sends the first indication information to the Road Side Unit (RSU), the method may further include: sending timeout information of a timer to the RSU, wherein the timeout information of the timer may be used to indicate a timeout T of the timer in the RSU.

That is, after the timer of the RSU reaches the above timeout T, the sending of the V2X message will be stopped. In this way, the timing control of sending the V2X message to the terminal by the RSU is realized, so as to avoid the problem of energy waste caused by sending the V2X message for a long time.

Through the embodiments of the present disclosure, the network device sends, to the Road Side Unit (RSU), indication information for instructing the RSU to start or stop sending the V2X message, so that the RSU controls the RSU to start or stop transmitting the V2X message according to the instruction of the foregoing first indication information, so as to reasonably control the RSU to start or stop sending the V2X message to the terminal in the communication process of Internet of Vehicles, and save the power consumption of the communication parties to a greater extent, thereby overcoming the problem of large communication power consumption caused by the unreasonable control of the communication process of the Internet of Vehicles in the related art, and then achieving energy-saving effect.

As an optional solution, the apparatus may further include:
1) a first receiving unit, configured to, before the network device sends the first indication information to the Road Side Unit (RSU), receive second indication information sent by the terminal, wherein the second indication information may carry at least one of the following information: indication information indicating that the terminal is interested and/or not interested in sending and/or receiving a V2X message, and indication information indicating a V2X message type or a V2X service type that the terminal is interested in or supports.

Optionally, in this embodiment, the second indication information may include at least one of the following: an RSU discovery message, a discovery reference signal, a D2D discovery message, and a D2D communication message. The discovery reference signal may be a physical layer reference signal.

It should be noted that the content of the above second indication information may be specifically as follows.
1) The RSU discovery message may be, but not limited to, indication information indicating an interest in a V2X message, or indication information of a V2X message type and/or a V2X service type that the terminal is interested in or supports.
2) The above-mentioned discovery reference signal may be, but not limited to, a physical layer reference signal, which is used to indicate an interest in V2X message.
3) The foregoing D2D discovery message may include, but is not limited to, sending a D2D discovery message through a D2D discovery mechanism, wherein the discovery message carries indication information that indicates an interest in the V2X message or indication information of a V2X message type and/or a V2X service type that the terminal is interested in or supports.
4) The foregoing D2D communication message may include, but is not limited to, sending a D2D communication message through a D2D communication mechanism, wherein the communication message carries indication information that indicates an interest in the V2X message, or indication information that indicates a V2X message type and/or a V2X service type that the terminal is interested in or supports.

Through the embodiments of the present disclosure, receiving, by the network device, the second indication information sent by the terminal realizes that the terminal controls whether to send the first indication information for instructing the RSU to start or stop sending the V2X message to the RSU, thereby facilitating the terminal to timely monitor the V2X message sent by the corresponding RSU in the communication process of Internet of Vehicles.

As an optional solution, the apparatus may further include:
1) an obtaining unit, configured to, before the network device sends the first indication information to the RSU, obtain RSU signal coverage information of the RSU.

Specifically, explainations will be given with reference to the example shown in Fig. 4. The base station is used as the above network device for an example, and it is assumed that the RSU closest to the terminal is selected for sending the V2X message. As shown in Fig. 4, in steps S402-S412, the base station 404 acquires the terminal geographical location information of the terminal 402 and RSU signal coverage information of the RSU 406, and obtains the RSU closest to the terminal 402 by comparing the terminal 402 and the geographical location information of the RSUs indicated by the signal coverage information of multiple RSUs. It is assumed that the RSU 406 is the RSU closest to the terminal 402, then the base station 404 sends to the RSU 406 indication information for instructing the RSU to start or stop sending the V2X message, so that the RSU 406 sends the V2X message to the terminal 402.

With the embodiments of the present disclosure, the RSU sends the RSU signal coverage information of the RSU to the network device, so that the network device selects the RSU that communicates with the terminal. In this way, the V2X message is sent to the terminal by selecting an RSU that matches the terminal so as to avoid the problem of low communication efficiency caused by poor communication between the RSU and the terminal. Further, sending the V2X message to the terminal by using the selected RSU will also achieve the effect of greatly reducing communication power consumption.

As an optional solution, the obtaining unit may include:
1) a first obtaining module, configured to obtain RSU signal coverage information of multiple RSUs through a server of Internet of Vehicles; or
2) a receiving module, configured to receive RSU signal coverage information sent by an RSU; or
3) a second obtaining module, configured to obtain RSU signal coverage information through a configuration of a network management device.

It should be noted that, the foregoing network management device is an OAM (operation and maintenance), and may be a functional entity configured to configure network management parameters.

Through the embodiments of the present disclosure, RSU location information of the RSU is obtained through different manners so that the network device can select an RSU that matches the terminal properly for communication, thus ensuring effective control of the Internet of Vehicles communication through the RSU and thereby saving energy.

As an optional solution, the apparatus may further include:
1) a second receiving unit, configured to, when the network device obtains the RSU signal coverage information of the RSU, receive the terminal geographical location information reported by the terminal.

As an optional solution, the apparatus may further include:
1) a determining unit, configured to, after the network device receives the terminal geographical location information reported by the terminal, determine the RSU closest to the terminal according to the terminal geographical location information and the RSU signal coverage information, and send the first indication information to the RSU closest to the terminal; or
2) a second sending unit, configured to send the first indication information to the RSU with the signal coverage indicated by the RSU signal coverage information that includes the terminal.

Specifically, the explanations will be given in combination with the example shown in Fig. 6.

The base station is used as the above network device for an example, and it is assumed that the RSU including the terminal within the signal coverage of the RSU is selected to send the V2X message. As shown in Fig. 6, in steps S602-S612, the base station 404 acquires the terminal geographical location information of the terminal 402 and RSU signal coverage information of the RSU 406, determines the RSU signal coverage where the terminal 402 is located according to the RSU signal coverage information, and acquires the RSU with the RSU signal coverage including the terminal. It is assumed that the RSU including the terminal is the RSU 406, the base station 404 sends to the RSU 406 an indication message for instructing the RSU to start or stop sending the V2X message, so that the RSU 406 sends the V2X message to the terminal 402.

With the embodiments of the present disclosure, the V2X message is sent to the terminal by selecting an RSU matching the terminal, so as to avoid the problem of low communication efficiency caused by poor communication between the RSU and the terminal. Further, sending the V2X message to the terminal by using the selected RSU will also achieve the effect of greatly reducing communication power consumption.

As an optional solution, the apparatus may further include:
1) a third receiving unit, configured to, before the network device sends the first indication information to the Road Side Unit (RSU), receive third indication information sent by the RSU, the third indication information being used to indicate a V2X message type or V2X service type supported by the RSU.

As an optional solution, the first sending unit may include:
1) a second sending module, configured to determine the RSU nearest to the terminal according to the terminal geographical location information and the RSU signal coverage information, and send first indication information to the RSU that is closest to the terminal and supports the V2X message type or the V2X service type including the V2X message type or the V2X service type that the terminal is interested in or supports; or
2) a third sending module, configured to send first indication information to an RSU with the RSU signal coverage that includes the terminal and supports a V2X message type or V2X service type including a V2X message type or a V2X service type that the terminal is interested in or supports.

Optionally, in this embodiment, the V2X message type or V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

With the embodiments of the present disclosure, the network device may select the RSU based on the selection of the RSU depending on the distance from the terminal and further in combination with the V2X message type or the V2X service type that is of interest to or supported by the terminal. In this way, an RSU with a relatively high degree of matching with the terminal is selected, thereby reducing unnecessary message forwarding. Under the premise of ensuring the communication effect, the communication efficiency is also improved, and the communication power consumption is reduced.

As an optional solution, the apparatus may further include:
1) a third sending unit, configured to, before the network device sends the first indication information to the Road Side Unit (RSU), send timeout information of a timer to the RSU, the timeout information of the timer being used to indicate the timeout time T of the timer in the RSU, so that the RSU starts or stops sending the V2X message according to the timeout time T.

For example, if the RSU receives new first indication information for instructing the RSU to start sending the V2X message to the terminal before the timeout T indicated by the timeout information of the timer arrives, the RSU restarts the timer to clear the timer and updates the starting time, thereby controlling the duration of sending the V2X message to the terminal by the RSU by using the updated timeout time.

Through the embodiments of the present disclosure, a timer is set to implement timing control on sending a V2X message by an RSU, so as to avoid waste of resources and poor user experience caused by sending a V2X message to the terminal for a long time, thereby reducing communication power consumption and saving energy.

### Eighth embodiment

The present embodiment further provides an apparatus for controlling communication in Internet of Vehicles. The apparatus may be located in a terminal. The apparatus is configured to implement the foregoing embodiments and alternative embodiments, and details which have been described will not be elebrated here. As used below, the term "module" may be a combination of software and/or hardware that achieves a predetermined function. Although the apparatuses described in the following embodiments may be implemented in software, the implementation of hardware or a combination of software and hardware is also possible and conceived.

In this embodiment, an optional apparatus for controlling communication in Internet of Vehicles is provided. As shown in Fig. 12, the apparatus may be located at a terminal, and the apparatus includes:
1) a first sending unit 1202, configured to send indication information to a Road Side Unit (RSU), the indication information carrying at least one of the following information: indication information that the terminal is interested in sending and/or receiving of the V2X message, a V2X message type that the terminal is interest in or supports, and a V2X service type that the terminal is interested in or supports;
2) a transmission unit 1204, configured to send and/or receive the V2X message.

Optionally, in this embodiment, the method for controlling the communication in Internet of Vehicles may be applied in an application environment as shown in Fig. 3(a) or Fig. 3(b), but the present disclosure is not limited thereto. In Fig. 3(a), after the vehicle terminal 302-1 and the vehicle terminal 302-2 access the mobile communication network through the Road Side Unit (RSU) 304 to implement communication with the mobility management unit (MME) and the gateway PGW/SGW in the mobile communication network, the vehicle terminal 302-1 and the vehicle terminal 302-2 further communicate with a traffic safety server 306.

However, in the application environment shown in Fig. 3(b), a base station 308 is added in the communication process. The details of the communication process in Fig. 3(b) will not be described again. Specifically, the terminal sends indication information to the Road Side Unit (RSU), the indication information carrying at least one of the following information: indication information that the terminal is interested in sending and/or receiving of the V2X message, a V2X message type that the terminal is interested in or that is supported by the terminal, a V2X service type that the terminal is interested in or supports; so that the RSU sends a V2X message to the terminal according to the above indication information. In this way, it is possible to reasonably control the RSU to start or stop sending the V2X message to the terminal in the communication process of Internet of Vehicles, so as to save the power consumption of the communication parties to a greater extent, thereby overcoming the problem of large communication power consumption in the related art due to that the communication process of the Internet of Vehicles can not be reasonably controlled, so as to achieve energy-saving effect.

It should be noted that, in this embodiment, the receiving, by the terminal, the V2X message sent by the RSU may also be expressed as that the terminal monitors the V2X message sent by the RSU, which is not limited in this embodiment.

Optionally, in this embodiment, the V2X (Vehicle-to-Everything) message sent by the Road Side Unit (RSU) to the terminal may include at least one of the following: a Vehicle-to-Vehicle Communications (V2V) message, a Vehicle-to-Infrastructure Communications (V2I) message, and a Vehicle-to-Pedestrian Communications (V2P) message.

Optionally, in this embodiment, the foregoing terminal may include, but not limited to, at least one of the following: a connected state terminal and an idle state terminal.

Optionally, in this embodiment, the foregoing V2X message type or V2X service type may include at least one of the following: an auto-park system service type, an emergency stop indication service type, a queue alarm service type, a road safety service business type, a curve travelling warning service type, an emergency service type, a non-emergency service type, a safety service type, and a commercial service type.

Optionally, in this embodiment, the above indication information may include at least one of the following: an RSU discovery message, a discovery reference signal, a D2D discovery message, and a D2D communication message. Specifically, the contents of the above indication information may be as follows.
1) The above RSU discovery message may be carry indication information that indicates an interest in V2X messages, or indication information of the V2X message type and/or the V2X service type that the terminal is interested in or that is supported by the terminal, but the present disclosure is not limited thereto.
2) The above discovery reference signal may be, but is not limited to, a physical layer reference signal, which is used to indicate an interest in the V2X message.
3) The above D2D discovery message may include, but is not limited to: sending the D2D discovery message through a D2D discovery mechanism, the discovery message carrying indication information that indicates an interest in the V2X message, or indication information of the V2X message type and/or V2X service type that the terminal is interested in or supports.
4) The above D2D communication message may include, but is not limited to: sending the D2D communication message through the D2D communication mechanism, the communication message carrying the indication information that indicates an interest in the V2X message, or indication information of the V2X message type and/or V2X service type that the terminal is interested in or that is supported by the terminal.

Through the embodiments of the present disclosure, the terminal sends indication information to the RSU, wherein the indication information may carry at least one of the following information: indication information that the terminal is interested in sending and/or receiving of the V2X message, a V2X message type that the terminal is interested in or supports, a V2X service type that the terminal is interested in or supports; so that the RSU sends the V2X message to the terminal according to the above indication information. In this way, the terminal can control whether the RSU sends the above V2X message.

As an optional solution, the apparatus may further include:
1) a first receiving unit, configured to, before the terminal sends the indication information to the Road Side Unit (RSU), receive resource configuration information of the indication information sent by the network device, where the resource configuration information may include: time-frequency resource configuration information and period configuration information.

Optionally, in this embodiment, the foregoing time-frequency resource configuration information may be used to send a V2X message at a frequency and a subframe position indicated by the time-frequency resource.

Optionally, in this embodiment, the period configuration information may include long period configuration information and short period configuration information, and the first sending unit may include:
1) a first sending module, configured to, when the terminal detects the V2X message sent by the RSU, send the indication information according to the long period configuration information; and
2) a second sending module, configured to, when the terminal does not detect the V2X message sent by the RSU, send the indication information according to the short period configuration information.

Specifically, explainations will be given with reference to the following examples. If the terminal detects that an RSU sends a V2X message, the terminal sends indication information to the network device according to the long period configuration information with a relatively long period to ensure timely listening for the above V2X message sent by the RSU. In addition, if the terminal does not detect the V2X message sent by the RSU, that is, the terminal does not currently need to occupy communication resources for a long time, the indication information only needs to be sent in a short period.

According to the embodiments of the present disclosure, the indication information is sent according to different needs based on different periods, which further ensures the flexibility of sending indication information to save energy and avoid the problem of waste of communication resources caused by long-term occupation.

### Ninth embodiment

In this embodiment, an apparatus for controlling communication in Internet of Vehicles is further provided. The apparatus may be located in the terminal. The apparatus is configured to implement the foregoing embodiments and alternative embodiments, and details which have been described will not be elebrated here. As used below, the term "module" may be a combination of software and/or hardware that achieves a predetermined function. Although the apparatuses described in the following embodiments may be implemented in software, the implementation of hardware or a combination of software and hardware is also possible and conceived.

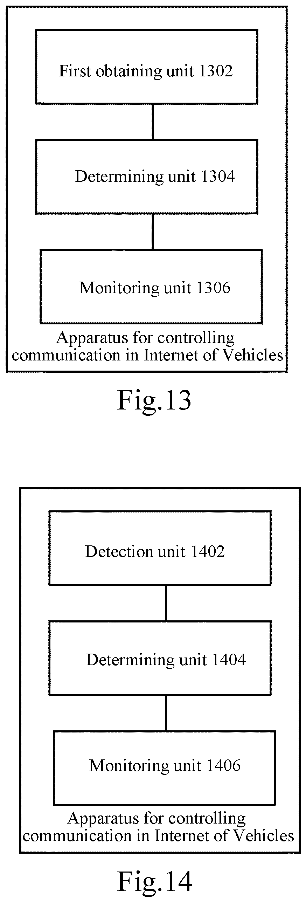

In this embodiment, an optional apparatus for controlling Internet of Vehicles communication is provided. As shown in Fig. 13, the apparatus may be located at a terminal, and the apparatus includes:
1) a first obtaining unit 1302, configured to obtain current terminal geographical location information of a terminal and RSU signal coverage information of a Road Side Unit (RSU);
2) a determining unit 1304, configured to determine whether a distance between the terminal and the RSU is less than or equal to a predetermined threshold value according to the terminal geographical location information and the RSU signal coverage information of the RSU; and
3) a monitoring unit 1306, configured to, when the distance between the terminal and the RSU is less than or equal to the predetermined threshold value, start listening for the V2X message sent by the RSU.

Optionally, in this embodiment, for the application scenario of the method for controlling communication of Internet of Vehicles, reference may be made to the foregoing Sixth to Eighth embodiments, which will not be described in detail in this embodiment.

It should be noted that, in this embodiment, the Sixth to Eighth embodiments describe the energy saving control for the Internet of Vehicles communication by controlling the RSU. In the present embodiment, the energy saving control for Internet of Vehicles communication is achieved by controlling energy saving of the terminal. Regardless of the energy saving control of the RSU or the terminal, the purpose of reducing communication power consumption and saving energy can be realized. For example, assuming that the terminal and the RSU are both off at the initial state, and if the terminal is outside the coverage of the RSU, then the terminal continues to be off. When the terminal runs within the coverage of the RSU, the monitoring may be started. On the other hand, the terminal or the base station may send an indication message to the RSU to request the RSU to start sending or listening.

Optionally, in this embodiment, the receiving, by the terminal, the V2X message sent by the RSU may also be expressed as that the terminal monitors the V2X message sent by the RSU, which is not limited in this embodiment.

Optionally, in this embodiment, the foregoing terminal may include, but is not limited to, at least one of the following: a connected state terminal and/or an idle state terminal.

Specifically, explainations will be given with reference to the following examples. The terminal acquires current terminal geographical location information of the terminal and the RSU signal coverage information of the Road Side Unit (RSU). The terminal determines whether the distances between the terminal and multiple RSUs are less than or equal to a predetermined threshold value. If the terminal determines that the distance to one of the RSUs is less than or equal to the predetermined threshold value, the monitoring of the V2X message sent by the RSU is started.

Optionally, in this embodiment, the predetermined threshold value may be, but is not limited to, being configured by the terminal in a Universal Integrated Circuit Card (UICC), and may also be, but is not limited to, receiving a system message or an RRC specific message sent by a network device. The above message may carry the predetermined threshold value.

Optionally, in this embodiment, before the monitoring of the V2X message is started, the method may further include: acquiring, by the terminal, indication information used for indicating a V2X message type or a V2X service type supported by the RSU; and determining, by the terminal, whether the V2X message type or the V2X service type supported by the RSU includes a V2X message type or a V2X service type that the terminal is interested in or supports.

That is, before monitoring the V2X message sent by the RSU, the terminal may determine, in addition to determining whether the distance relative to the RSU satisfies a condition, whether the received V2X message type or the V2X service type supported by the RSU includes the V2X message type or the V2X service type that the terminal is interested in or supports, so as to select the RSU that matches the terminal to send the V2X message to avoid the problem of communication inefficiency caused by poor communication between the RSU and the terminal, but the present disclosure is not limited thereto.

It should be noted that, the V2X message type or the V2X service type supported by the foregoing RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Through the embodiments of the present disclosure, the terminal selects the RSU that matches the terminal to perform coordinated communication of Internet of Vehicles, so as to achieve the purpose of saving bandwidth and avoiding waste of energy by reducing forwarding under the premise of ensuring the communication effect.

As an optional solution, the first acquisition unit may include:
1) a first obtaining module, configured to obtain the RSU signal coverage information through an application layer server; or
2) a receiving module, configured to receive a system message or an RRC-dedicated message that is sent by a network device and carries the RSU signal coverage information.

Optionally, in this embodiment, the RSU signal coverage information may include at least one of the following: geographical location information of the RSU; the geographical location information of the RSU and signal coverage level indication information of the RSU; and the geographical location information of the RSU and transmission power level indication information of the RSU.

Optionally, in this embodiment, the V2X message type or V2X service type supported by the RSU may include at least one of the following: an auto-park system service type, an emergency stop indication service type, a queue alarm service type, a road safety service business type, a curve travelling warning service type, an emergency service type, a non-emergency service type, a safety service type, and a commercial service type.

Through the embodiments of the present disclosure, RSU location information of the RSU is obtained through different manners so that the network device can select an RSU that matches the terminal for communication, thus ensuring effective control of the Internet of Vehicles communication through the RSU and thereby saving energy.

As an optional solution, the apparatus may further include at least one of the following:
1) a pre-configuring unit, configured to, before starting monitoring of the V2X message, pre-configure the predetermined threshold value in a universal integrated circuit card UICC; and
2) a receiving unit, configured to, before starting monitoring of the V2X message, receive a system message or an RRC-dedicated message which carries the predetermined threshold value and is sent by a network device.

With the embodiments of the present disclosure, the predetermined threshold value is obtained in different manners, which further improves the communication efficiency between the terminal and the Internet of Vehicles.

As an optional solution, the apparatus may further include:
1) a second acquisition unit, configured to, before the terminal starts monitoring the V2X message, acquire indication information for indicating a V2X message type or a V2X service type supported by the RSU.

As an optional solution, the monitoring unit may include:
1) a determining module, configured to determine whether the V2X message type or V2X service type supported by the RSU includes a V2X message type or a V2X service type that the terminal is interested in or that is supported by the terminal;
2) a monitoring module, configured to, when the V2X message type or the V2X service type supported by the RSU includes the V2X message type or the V2X service type that the terminal is interested in or that is supported by the terminal, start to monitor the V2X message sent by the RSU.

Through the embodiments of the present disclosure, the terminal selects the RSU matching with the terminal to perform coordinated Internet of Vehicles communication by comparing the V2X message types or the V2X service types, so as to monitor the corresponding V2X message type or V2X service type information according to the preference of the user to improve user experience.

### Tenth embodiment

In this embodiment, an apparatus for controlling communication in Internet of Vehicles is further provided. The apparatus may be located in the terminal. The apparatus is configured to implement the foregoing embodiments and alternative embodiments, and details which have been described will not be elebrated here. As used below, the term "module" may be a combination of software and/or hardware that achieves a predetermined function. Although the apparatuses described in the following embodiments may be implemented in software, the implementation of hardware or a combination of software and hardware is also possible and conceived.

In this embodiment, an optional apparatus for controlling Internet of Vehicles communication is provided. As shown in Fig. 14, the apparatus may be located at a terminal, and the apparatus includes:
1) a detection unit 1402, configured to detect terminal geographical location information where the terminal currently resides;
2) a determining unit 1404, configured to determine whether the terminal enters a predetermined area according to the terminal geographical location information, wherein the terminal located in the predetermined area will receive the V2X message sent by the Road Side Unit (RSU);
3) a monitoring unit 1406, configured to, when it is determined that the terminal enters the predetermined area, start to monitor the V2X message sent by the RSU.

Optionally, in the embodiment, the predetermined area may include: a dangerous/forbidden area, and a designated receiving area for V2X message. The dangerous/forbidden area comprises at least one of the following: an intersection, a sidewalk, and an area through which no pedestrian passes. The above area can be set by an application layer of the terminal.

It should be noted that in this embodiment, the terminal may further directly control the terminal to receive the V2X message sent by the RSU by detecting whether the terminal enters the predetermined area, so as to directly control the terminal to receive the V2X message according to the location information of the area. In this way, it is possible to effectively control the Internet of Vehicles communication by directly utilizing the location information of the area, so as to avoid the problem of resource waste caused by occupation of communication resource for a lont time for receiving (i.e., listening for) the V2X message sent by the RSU for a long time, thereby saving energy.

### Eleventh embodiment of the present disclosure

An embodiment of the present disclosure further provides a computer readable storage medium storing a computer executable instruction, and when the computer executable instruction is executed, the above method for controlling the Internet of Vehicles communication is implemented.

Those having ordinary skills in the art may understand that all or part of the steps of the foregoing embodiments may be implemented by using a computer program which may be stored in a computer readable storage medium and executed on a corresponding hardware platform (such as a system, equipment, an apparatus, a device, a processor, etc.), and when being executed, includes one or a combination of the steps of the method embodiment.

Alternatively, all or part of the steps in the above embodiments may also be implemented by using integrated circuits. These steps may be separately manufactured as one integrated circuit module or multiple modules or steps in them may be made into a single integrated circuit module.

The apparatuses/functional modules/functional units in the foregoing embodiments can be implemented by universal computing devices, which can be concentrated on a single computing device or distributed on the network composed of multiple computing devices.

The apparatuses/functional modules/functional units in the foregoing embodiments may also be stored in a computer-readable storage medium if being implemented in the form of a software functional module and sold or used as an independent product. The above-mentioned computer-readable storage medium may be a read-only memory, a magnetic disk, an optical disk, or the like

## Claims

1. A method for controlling communication in Internet of Vehicles, comprising:
receiving (S202), by a Road Side Unit, RSU, first indication information, wherein the first indication information is used to indicate the RSU to start or stop sending a Vehicle-to-Everything communications, V2X, message; and
starting or stopping sending the V2X message in response to the first indication information by the RSU (S204),
wherein the receiving (S202), by the Road Side Unit, RSU, the first indication information, comprises receiving, by the RSU, the first indication information sent by a network device, wherein the network device comprises at least one of a base station, a Proximity Services, ProSe, function unit, a V2X function unit, and a network element that performs a Device-to-Device control function,
and **characterized by**, before receiving (S202), by the RSU, the first indication information sent by the network device, the method further comprises sending, by the RSU, RSU signal coverage information of the RSU to the network device.

2. The method according to claim 1, wherein the RSU signal coverage information comprises at least one of the following: geographical location information of the RSU; the geographical location information of the RSU and signal coverage level indication information of the RSU; and the geographical location information of the RSU and transmission power level indication information of the RSU.

3. The method according to claim 2, wherein the sending, by the RSU, the RSU signal coverage information of the RSU to the network device comprises at least one of:
sending, by the RSU, detected RSU signal coverage information of the RSU to the network device through a server of Internet of vehicles; and
sending, by the RSU, the detected RSU signal coverage information of the RSU to the network device directly.

4. The method according to claim 1, when the RSU receives (S202) the first indication information, the method further comprises:
receiving, by the RSU, timeout information of a timer sent by the network device; or
pre-configuring, by the RSU, timeout information of a timer.

5. The method according to claim 4, wherein the starting or stopping sending the V2X message in response to the first indication information by the RSU (S204), comprises:
when the first indication information indicates the RSU to start sending the V2X message to a terminal, starting to send the V2X message and starting the timer to start counting by the RSU; and
after the timer reaches timeout T indicated by the timeout information, stopping sending the V2X message to the terminal by the RSU; or, before the timer reaches timeout T indicated by the timeout information, if the RSU receives indication information for indicating the RSU to start sending the V2X message to the terminal, restarting the timer to clear the timer.

6. A method for controlling communication in Internet of Vehicles, comprising:
sending (S502), by a network device, first indication information to a Road Side Unit, RSU, wherein the first indication information is used to indicate the RSU to start or stop sending a Vehicle-to-Everything communications, V2X message,
haracterized by, before sending (S502), by the network device, the first indication information to the RSU, the method further comprises acquiring, by the network device, RSU signal coverage information of the RSU.

7. The method according to claim 6, wherein the sending (S502), by the network device, the first indication information to the Road Side Unit, RSU, comprises:
sending, by the network device, a system message or a Radio Resource Control, RRC, dedicated message carrying the first indication information.

8. The method according to claim 6, before sending (S502), by the network device, the first indication information to the Road Side Unit, RSU, the method further comprises:
receiving, by the network device, second indication information sent by a terminal, wherein the second indication information carries at least one of following information: indication information indicating that the terminal is interested in and/or not interested in sending and/or receiving the V2X message, and indication information indicating a V2X message type or a V2X service type that the terminal is interested in or supports.

9. The method according to claim 6, wherein the acquiring the RSU signal coverage information of the RSU comprises:
acquiring, by the network device, the RSU signal coverage information of multiple RSUs via a server of Internet of Vehicles; or
receiving, by the network device, the RSU signal coverage information sent by the RSU; or
acquiring, by the network device, the RSU signal coverage information through a configuration of a network management device.

10. The method according to claim 6, wherein when acquiring, by the network device, the RSU signal coverage information of the RSU, the method further comprises:
receiving, by the network device, terminal geographical location information reported by the terminal.

11. The method according to claim 10, wherein after receiving, by the network device, the terminal geographical location information reported by the terminal, the method further comprises:
determining an RSU nearest to the terminal according to the terminal geographical location information and the RSU signal coverage information, and sending the first indication information to the RSU nearest to the terminal, by the network device; or
sending, by the network device, the first indication information to an RSU with the RSU signal coverage information indicating a signal coverage in which the terminal is included.

12. The method according to claim 10, wherein before sending, by the network device, the first indication information to the Road Side Unit, RSU, the method further comprises:
receiving, by the network device, third indication information sent by the RSU, wherein the third indication information is used to indicate a V2X message type or a V2X service type that is supported by the RSU.

## Patentansprüche

1. Verfahren zur Steuerung der Kommunikation im Internet von Fahrzeugen, umfassend:
Empfangen (S202) erster Anzeigeinformationen durch eine RSU (Road Side Unit), wobei die ersten Anzeigeinformationen verwendet werden, um der RSU anzuzeigen, das Senden einer V2X-Kommunikationsnachricht (Vehicle-to-Everything) zu starten oder zu beenden; und
Starten oder Stoppen des Sendens der V2X-Nachricht durch die RSU (S204) als Antwort auf die ersten Anzeigeinformationen,
wobei das Empfangen (S202) der ersten Anzeigeinformationen durch die RSU (Road Side Unit) das Empfangen der von einem Netzwerkgerät gesendeten ersten Anzeigeinformationen durch die RSU umfasst, wobei das Netzwerkgerät mindestens eine Basisstation, eine (Proximity Services) ProSe-Funktionseinheit, eine V2X-Funktionseinheit und ein Netzwerkelement, das eine Geräte-zu-Geräte-Steuerungsfunktion ausführt, umfasst und **dadurch gekennzeichnet ist, dass** vor dem Empfangen (S202) der ersten, von dem Netzwerkgerät gesendeten Anzeigeinformationen, durch die RSU, das Verfahren ferner das Senden von RSU-Signalabdeckungsinformationen der RSU, durch die RSU, an das Netzwerkgerät umfasst.

2. Verfahren nach Anspruch 1, bei dem die RSU-Signalabdeckungsinformationen mindestens eines der Folgenden umfassen: geografische Standortinformationen der RSU; geografische Standortinformationen der RSU und Informationen zur Anzeige des Signalabdeckungspegels der RSU; und geografische Standortinformationen der RSU und Informationen zur Anzeige des Übertragungsleistungspegels der RSU.

3. Verfahren nach Anspruch 2, wobei das Senden der RSU-Signalabdeckungsinformationen der RSU, durch die RSU, an das Netzwerkgerät mindestens eines der Folgenden umfasst:
Senden von erfassten RSU-Signalabdeckungsinformationen der RSU, durch die RSU, an das Netzwerkgerät mittels eines Servers des Internets von Fahrzeugen; und
Senden der erfassten RSU-Signalabdeckungsinformationen der RSU, durch die RSU, direkt an das Netzwerkgerät.

4. Verfahren nach Anspruch 1, wenn die RSU die ersten Anzeigeinformationen empfängt (S202), das Verfahren ferner umfasst:
Empfangen von, vom Netzwerkgerät gesendeten, Zeitüberschreitungsinformationen, durch die RSU, eines Zeitgebers; oder Vorkonfigurieren von Zeitüberschreitungsinformationen eines Zeitgebers, durch die RSU.

5. Verfahren nach Anspruch 4, wobei das Starten oder Stoppen des Sendens der V2X-Nachricht, durch die RSU (S204), als Antwort auf die ersten Anzeigeinformationen, umfasst:
wenn die ersten Anzeigeinformationen der RSU anzeigen, mit dem Senden der V2X-Nachricht an ein Endgerät zu beginnen, mit dem Senden der V2X-Nachricht zu beginnen und den Zeitgeber zu starten, um die Zeitnahme durch die RSU zu starten; und
nachdem der Zeitgeber die durch die Zeitüberschreitungsinformation angezeigte Zeitüberschreitung T erreicht hat, stoppen des Sendens der V2X-Nachricht an das Endgerät, durch die RSU; oder, bevor der Zeitgeber die durch die Zeitüberschreitungsinformation angezeigte Zeitüberschreitung T erreicht, wenn die RSU Anzeigeinformationen erhält, um der RSU anzuzeigen, mit dem Senden der V2X-Nachricht an das Endgerät zu beginnen, den Zeitgeber neu zu starten, um den Zeitgeber zu bereinigen.

6. Verfahren zur Steuerung der Kommunikation im Internet von Fahrzeugen, umfassend:
Senden (S502), durch ein Netzwerkgerät, erster Anzeigeinformationen an eine RSU (Road Side Unit), wobei die ersten Anzeigeinformationen verwendet werden, um der RSU anzuzeigen, das Senden einer V2X-Kommunikationsnachricht (Vehicle-to-Everything) zu starten oder zu stoppen, **dadurch gekennzeichnet, dass** vor dem Senden (S502) der ersten Anzeigeinformationen an die RSU, durch das Netzwerkgerät, das Verfahren ferner das Erfassen von RSU-Signalabdeckungsinformationen der RSU, durch das Netzwerkgerät, umfasst.

7. Verfahren nach Anspruch 6, wobei das Senden (S502) der ersten Anzeigeinformationen, durch das Netzwerkgerät, an die RSU (Road Side Unit) umfasst:
Senden einer Systemnachricht oder einer dedizierten RRC-Nachricht (Radio Resource Control), die die ersten Anzeigeinformationen trägt, durch das Netzwerkgerät.

8. Verfahren nach Anspruch 6, wobei vor dem Senden (S502), durch das Netzwerkgerät, der ersten Anzeigeinformationen an die RSU (Road Side Unit) das Verfahren ferner umfasst:
Empfangen, durch das Netzwerkgerät, von zweiten Anzeigeinformationen, die von einem Endgerät gesendet werden, wobei die zweiten Anzeigeinformationen mindestens eine der folgenden Informationen tragen: Anzeigeinformationen, die anzeigen, dass das Endgerät am Senden und/oder Empfangen der V2X-Nachricht interessiert und/oder nicht interessiert ist, und Anzeigeinformationen, die auf einen V2X-Nachrichtentyp oder einen V2X-Servicetyp hinweisen, an dem das Endgerät interessiert ist oder den es unterstützt.

9. Verfahren nach Anspruch 6, wobei das Erfassen der RSU-Signalabdeckungsinformationen der RSU umfasst:
Erfassen, durch das Netzwerkgerät, der RSU-Signalabdeckungsinformationen mehrerer RSUs über einen Server des Internets von Fahrzeugen; oder
Empfangen, durch das Netzwerkgerät, der von der RSU gesendeten Signalabdeckungsinformationen; oder
Erfassen, durch das Netzwerkgerät, der RSU-Signalabdeckungsinformationen durch eine Konfiguration eines Netzwerkmanagementgerätes.

10. Verfahren nach Anspruch 6, wobei das Verfahren beim Erfassen, durch das Netzwerkgerät, der RSU-Signalabdeckungsinformation der RSU ferner umfasst:
Empfangender vom Endgerät gemeldeten geografischen Standortinformationen, durch das Netzwerkgerät.

11. Verfahren nach Anspruch 10, wobei das Verfahren nach dem Empfangen, durch das Netzwerkgerät, der von dem Endgerät gemeldeten geographischen Standortsinformation des Endgerätes, ferner umfasst:
Bestimmen einer RSU, die dem Endgerät am nächsten liegt, anhand der geografischen Standortinformationen des Endgeräts und der RSU-Signalabdeckungsinformationen, und Senden der ersten Anzeigeinformation an die RSU, die dem Endgerät am nächsten liegt, durch das Netzwerkgerät; oder
Senden der ersten Anzeigeinformationen, durch das Netzwerkgerät, an eine RSU mit den RSU-Signalabdeckungsinformationen, die eine Signalabdeckung anzeigen, in der das Endgerät enthalten ist.

12. Verfahren nach Anspruch 10, wobei das Verfahren vor dem Senden der ersten Anzeigeinformation durch das Netzwerkgerät an die RSU (Road Side Unit) weiterhin umfasst:
Empfangen von dritten Anzeigeinformationen, durch das Netzwerkgerät, die von der RSU gesendet werden, wobei die dritten Anzeigeinformationen verwendet werden, um einen V2X-Nachrichtentyp oder einen VZX-Servicetyp anzuzeigen, der von der RSU unterstützt wird.

## Revendications

1. Procédé de contrôle de la communication dans l'Internet des véhicules, comprenant :
la réception (S202), par une RSU (Road Side Unit), des premières informations d'indication, dans laquelle les premières informations d'indication sont utilisées pour indiquer à la RSU de commencer ou d'arrêter la transmission d'un message de communication V2X (de véhicule à tout) ; et
commencer ou arrêter la transmission du message V2X en réponse aux premiers informations d'indication du RSU (S204),
dans lequel la réception (S202), par le RSU (Road Side Unit), des premiers informations d'indication, comprend la réception, par le RSU, des premières informations d'indication envoyées par un dispositif de réseau, dans lequel le dispositif de réseau comprend au moins une station de base, une unité fonctionnelle ProSe (services de proximité), une unité fonctionnelle V2X et un élément de réseau exécutant une fonction de contrôle de dispositif à dispositif, et **caractérisé par**, avant la réception (S202), par le RSU, des premiers informations d'indication envoyées par le dispositif de réseau, le procédé comprend en outre la transmission, par la RSU, des informations sur la couverture du signal de la RSU au dispositif du réseau.

2. Procédé selon la revendication 1, dans lequel les informations de couverture du signal RSU comprennent au moins un des éléments suivants : des informations sur la localisation géographique de la RSU ; les informations de localisation géographique de la RSU et les informations d'indication du niveau de couverture du signal de la RSU ; et les informations de localisation géographique de la RSU et les informations d'indication du niveau de puissance de transmission de la RSU.

3. Procédé selon la revendication 2, dans lequel la transmission, par la RSU, des informations de couverture du signal de la RSU au dispositif de réseau comprend au moins l'un des éléments suivants :
la transmission, par la RSU, des informations sur la couverture des signaux détectés de la RSU au dispositif de réseau par l'intermédiaire d'un serveur d'Internet de véhicules ; et
la transmission, par la RSU, des informations sur la couverture du signal détecté de la RSU directement au dispositif du réseau.

4. Procédé selon la revendication 1, lorsque le RSU reçoit (S202) les premières informations d'indication, le procédé comprend en outre :
la réception, par la RSU, des informations relatives au délai d'attente d'une minuterie envoyée par le dispositif de réseau ; ou la pré-configuration, par la RSU, des informations relatives au délai d'attente d'une minuterie.

5. Procédé selon la revendication 4, dans lequel le commencement ou l'arrêt de la transmission du message V2X en réponse aux premières informations d'indication par la RSU (S204), comprend :
lorsque les premières informations d'indication indiquent que la RSU doit commencer la transmission du message V2X à un terminal, commencer à transmettre le message V2X et commencer la minuterie pour que la RSU commence à compter ; et
après que la minuterie a atteint le temps d'attente T indiqué par les informations de temps d'attente, arrêter la transmission du message V2X au terminal par la RSU ; ou, avant que la minuterie ait atteint le temps d'attente T indiqué par les informations de temps d'attente, si la RSU reçoit des informations indiquant qu'elle doit commencer à transmettre le message V2X au terminal, recommencer la minuterie pour effacer la minuterie.

6. Procédé de contrôle de la communication dans l'Internet des véhicules, comprenant :
la transmission (S502), par un dispositif de réseau, des premières informations d'indication à une RSU (Road Side Unit), dans laquelle les premières informations d'indication sont utilisées pour indiquer à la RSU de commencer ou d'arrêter la transmission d'un message de communication V2X (de véhicule à tout), **caractérisé par**, avant la transmission (S502), par le dispositif de réseau, les premières informations d'indication à la RSU, le procédé comprend en outre l'acquisition, par le dispositif de réseau, des informations de couverture du signal de la RSU.

7. Procédé selon la revendication 6, dans lequel la transmission (S502), par le dispositif de réseau, des premières informations d'indication à la RSU (Road Side Unit) comprend :
la transmission, par le dispositif réseau, d'un message système ou d'un message RRC (Radio Resource Control) dédié portant les premières informations d'indication.

8. Procédé selon la revendication 6, avant la transmission (S502), par le dispositif de réseau, des premiers informations d'indication au RSU (Road Side Unit) ; le procédé comprend en outre :
la réception, par le dispositif de réseau, des secondes informations d'indication envoyées par un terminal, dans laquelle les secondes informations d'indication portent au moins une des informations suivantes : des informations indiquant que le terminal est intéressé et/ou non intéressé par la transmission et/ou la réception du message V2X, et des informations d'indication indiquant un type de message V2X ou un type de service V2X auquel le terminal s'intéresse ou qu'il supporte.

9. Procédé selon la revendication 6, dans lequel l'acquisition des informations de couverture du signal de la RSU comprend :
l'acquisition, par le dispositif de réseau, des informations sur la couverture des signaux de plusieurs RSU via un serveur de l'Internet des véhicules ; ou
la réception, par le dispositif de réseau, des informations sur la couverture du signal de la RSU envoyées par la RSU ; ou
l'acquisition, par le dispositif de réseau, des informations sur la couverture du signal de la RSU au moyen d'une configuration d'un dispositif de gestion de réseau.

10. Procédé selon la revendication 6, dans lequel, lors de l'acquisition, par le dispositif de réseau, des informations de couverture du signal de la RSU, le procédé comprend en outre :
la réception, par le dispositif de réseau, des informations sur la localisation géographique du terminal communiquées par le terminal.

11. Procédé selon la revendication 10, dans lequel, après la réception, par le dispositif de réseau, des informations de localisation géographique du terminal communiquées par le terminal, le procédé comprend en outre :
la détermination d'une RSU la plus proche du terminal en fonction des informations de localisation géographique du terminal et des informations de couverture du signal de la RSU, et la transmission des premières informations d'indication à la RSU la plus proche du terminal, par le dispositif de réseau ; ou
la transmission, par le dispositif de réseau, des premières informations d'indication à une RSU avec les informations de couverture de signal de la RSU indiquant une couverture de signal dans laquelle le terminal est inclus.

12. Procédé selon la revendication 10, dans lequel avant la transmission, par le dispositif de réseau, des premières informations d'indication à la RSU (Road Side Unit), le procédé comprend en outre :
la réception, par le dispositif de réseau, des troisièmes informations d'indication envoyées par la RSU, dans laquelle les troisièmes informations d'indication sont utilisées pour indiquer un type de message V2X ou un type de service VZX supporté par la RSU.
